# EUROPEAN PATENT APPLICATION

(11) **EP 3 337 142 A1**
(43) Date of publication of application: **20.06.2018**
(21) Application number: 15901052.9
(22) Date of filing: 02.09.2015
(51) Int. Cl.: H04M 1/725, G06F 3/0488, G06F 9/44, G06F 3/041

(54) **MOBILE TERMINAL AND CONTROL METHOD THEREFOR**

(30) Priority: 11.08.2015 KR 20150113410; 11.08.2015 KR 20150113412
(71) Applicant: LG Electronics Inc., Yeongdeungpo-gu Seoul 07336 (KR)
(72) Inventor: NO, Hyohoun, Seoul 06772 (KR); NA, Sungchae, Seoul 06772 (KR); AHN, Dohwan, Seoul 06772 (KR); IM, Dongseon, Seoul 06772 (KR)
(74) Representative: Vossius & Partner Patentanwälte Rechtsanwälte mbB
(86) International application number: PCT/KR2015/009240
(87) International publication number: WO 2017/026570

(57) **Abstract**

The present invention relates to a mobile terminal having a touch screen capable of sensing a touch, comprising: a first sensing unit for sensing the touch screen and a pressure applied to the touch screen; a second sensing unit for sensing a touch applied to the touch screen; and a control unit for determining the type of touch applied to the touch screen on the basis of at least one piece of sensing information sensed by the first sensing unit and the second sensing unit in a state in which an execution screen image of a first application is displayed on the touch screen, and executing a function related to the first application and/or a function related to a second application different from the first application on the basis of the type of the touch, wherein, when the function related to the second application is executed, the control unit executes the function related to the second application by using information transmitted from the first application.

## Description

### BACKGROUND OF THE INVENTION

### 1. Field of the invention

The present disclosure relates to a mobile terminal having a touch screen capable of sensing a touch.

### 2. Description of the related art

Terminals may be classified into mobile/portable terminals and stationary terminals according to their mobility. Mobile terminals may also be classified as handheld terminals or vehicle mounted terminals according to whether or not a user can directly carry the terminal.

The functions of mobile terminals are diversified. For example, the functions may include data and voice communication, photographing and video shooting through a camera, voice recording, music file playback through a speaker system, and displaying an image or video on a display unit. Some terminals further include an electronic game play function or perform a multimedia player function. In particular, in recent years, mobile terminals may receive multicast signals that provide visual content such as broadcast, video or television programs.

As it becomes multifunctional, for example, such a terminal is allowed to capture still images or moving images, play music or video files, play games, receive broadcast and the like, so as to be implemented as an integrated multimedia player.

In order to support and enhance the functions of the terminal, the improvement of structural or software elements of the terminal may be taken into consideration.

In recent years, multitasking is increasingly carried out on a mobile terminal. However, due to the movement characteristics of the mobile terminal, it has a display unit having a limited size, and therefore, unlike a computer, switching between applications is inconvenient.

The present disclosure provides a method for more easily controlling switching between applications.

### SUMMARY OF THE INVENTION

An object of the present disclosure is to provide a method of rapidly switching between each application in a mobile terminal that performs multitasking.

Another object of the present disclosure is to provide a method of switching applications in further consideration of the convenience of a user.

Still another object of the present disclosure is to provide a method of performing control of different screen information using different types of touches applied on a touch screen.

The present disclosure relates to a mobile terminal, and the mobile terminal may include a touch screen, a sensing unit configured to sense at least one of a pressure, a capacitance, and an area applied to the touch screen, and a controller configured to determine a type of touch applied to the touch screen based on sensing information sensed from the sensing unit while an execution screen of a first application is displayed on the touch screen, and execute at least one of a function associated with a first application and a function associated with a second application different from the first application, wherein when a function associated with the second application is executed, the controller executes the function associated with the second application using information transferred from the first application.

According to an embodiment, the controller may execute a function associated with the first application when a type of touch applied on the touch screen is a first type of touch applied with a pressure less than a preset value, and execute a function associated with the second application when the type of touch applied on the touch screen is a second type of touch applied with a pressure above the preset value.

According to an embodiment, the controller may display an execution screen of the second application on the touch screen, and display an execution screen of a third application different from the first and second applications on the touch screen when a third type of touch consecutive to the second type of touch is applied while the execution screen of the second application is displayed on the touch screen.

According to an embodiment, the third type of touch may include a touch applied with a pressure above a preset value and a drag touch consecutive to the touch.

According to an embodiment, the controller may execute the second application again in response to a fourth type of touch different from the third type of touch is applied while the execution screen of the third application is displayed.

According to an embodiment, when there are a plurality of the second applications, the controller may display an application list including items corresponding to a plurality of applications that can be executed using information included in the first application based on a touch with a pressure above a preset value being applied while the execution screen of the first application is displayed on the touch screen.

According to an embodiment, the second application may be any one application that is set based on the usage patterns of a plurality of applications among the plurality of applications in which information included in the first application is available for use.

According to an embodiment, the controller may set priorities among a plurality of applications based on the usage patterns of the applications when there are a plurality of the second applications, and execute any one of the plurality of applications based on the set priorities when the type of touch corresponds to a preset type.

According to an embodiment, when a touch different from the preset type of touch is applied again while the any one application is executed, the controller may execute another application different from the any one of the plurality of applications based on the priorities.

According to an embodiment, the controller may execute a function associated with the first application when the type of touch corresponds to a first type, and execute a function associated with the first application, and then display an execution screen of the second application on the touch screen when the type of touch is a second type different from the first type.

According to an embodiment, the controller may execute a function associated with the second application using information included in the first application when the first type of touch is applied again while the execution screen of the second application is displayed.

According to an embodiment, the controller may execute a function associated with the second application, and then display an execution screen of a third application different from the first and second applications on the touch screen when a touch corresponding to the second type is applied again while the execution screen of the second application is displayed.

According to an embodiment, the third application may be an application in which information included in the first application is available for use.

According to an embodiment, the controller may display an execution screen of a third application different from the first and second applications on the touch screen without executing a function associated with the second application when a third type of touch is applied while the execution screen of the second application is displayed.

According to an embodiment, when there are a plurality of the second applications, the controller may transmit information included in the first application to the plurality of applications at the same time to allow a function associated with the plurality of applications to use information included in the first application based on a preset type of touch being applied for the execution of the second application.

A method of controlling a mobile terminal according to another embodiment of the present disclosure may include sensing a touch applied on the touch screen while an execution screen of a first application is displayed on a touch screen, determining a type of the sensed touch, and executing at least one of a function associated with the first application and a function associated with a second application based on the determined type of touch.

According to an embodiment, said executing a function may execute a function associated with the second application using specific information included in the first application when the function associated with the second application is executed.

According to an embodiment, said determining a type of the touch may determine the sensed touch as a first type of touch when a pressure of the sensed touch is less than a preset pressure, and determine the sensed touch as a second type of touch when a pressure of the sensed touch is above a preset pressure.

According to an embodiment, said executing a function may execute a function associated with the first application based on the first type of touch, and execute a function associated with the second application based on the second type of touch.

According to an embodiment, said executing a function further may include switching the first application to a second application when executing a function associated with the second application.

A mobile terminal according to the present disclosure may include a touch screen, a sensing unit configured to sense at least one of a pressure, a change of capacitance, and an area applied on the touch screen, and a controller configured to determine a type of touch applied on the touch screen based on sensing information sensed through the sensing unit while screen information is displayed on the touch screen, and execute either one of a first function and a second function according to the determined type of touch, wherein a first function of moving the screen is executed in response to the drag input when the type of touch is a first type, and a second function of enlarging or reducing the screen is executed in response to the drag input when the type of touch is a second type.

According to an embodiment, the first type of touch may be a touch applied with a pressure less than a preset value, and the second type of touch may be a touch applied with a pressure above the preset value.

According to an embodiment, when the type of touch is a second type, the controller may enlarge or reduce the screen according to the direction of the drag input.

According to an embodiment, the controller may control the touch screen to locate a region to which the second type of touch is applied in a central region of the touch screen subsequent to executing the second function of enlarging or reducing the screen.

According to an embodiment, when the type of touch is a second kind, the controller may determine an enlargement or reduction ratio of the screen information based on a pressure applied by drag touch consecutive to the touch.

According to an embodiment, the screen information may be a thumbnail image of at least one image stored in the mobile terminal, and the controller may execute a first function of scrolling the thumbnail image of at least one image in response to the drag input when the touch is a first type of touch, and execute a second function of changing a size of the thumbnail image of at least one image displayed on a region of the thumbnail image of at least one image to which the touch is applied in response to the drag input when the touch is a second type of touch.

According to an embodiment, the controller may display the thumbnail image in a size prior to enlarging the thumbnail image when the drag input is terminated in a state where the size of the thumbnail image is changed.

According to an embodiment, the controller may display an image corresponding to the thumbnail image on the display unit when the second type of touch consecutive to the drag input is applied again in a state where the size of the thumbnail image is changed.

According to an embodiment, the controller may display an image corresponding to the thumbnail image on the display unit when the thumbnail image has a preset size.

A method of controlling a mobile terminal according to still another embodiment of the present disclosure may include displaying screen information on the touch screen, determining a type of touch applied to the touch screen, and executing either one of a first function and a second function according to the determined type of touch in response to a drag input consecutive to the touch, wherein a first function of moving the screen in response to the drag input is executed when the type of touch is a first type, and a second function of enlarging or reducing the screen in response to the drag input is executed when the type of the touch is a second type.

The present disclosure may quickly perform switching between applications with only one touch input in a mobile terminal that performs multitasking. Through this, a user may more naturally perform switching of an application.

Furthermore, the present disclosure may transmit related information together when switching between applications, thereby performing organic switching between applications. Through this, the user may more easily perform switching between applications as well as acquire necessary information without additionally entering the necessary information even when switching an application.

In addition, the present disclosure may more conveniently control screen information with only a single operation.

Moreover, the present disclosure may perform a touch operation, and then move screen information around a region in which the touch operation has been carried out, thereby providing a portion determined by the user as a region of interest.

### BRIEF DESCRIPTION OF THE DRAWINGS

FIG. 1A is a block diagram for explaining a mobile terminal associated with the present disclosure, and FIGS. 1B and 1C are conceptual views illustrating an example in which the mobile terminal associated with the present disclosure is seen from different directions;
FIGS. 2A, 2B, and 2C are conceptual views illustrating types of touches applied on a touch screen of a mobile terminal according to an embodiment of the present disclosure;
FIG. 3 is a flowchart illustrating a method of switching between different applications installed on a mobile terminal according to an embodiment of the present disclosure;
FIGS. 4A and 4B are conceptual views illustrating the control method of FIG. 3;
FIGS. 5A and 5B are conceptual views illustrating a method of switching between applications according to a type of touch applied on the touch screen;
FIG. 6 is a conceptual view illustrating a method of providing a list of candidate applications for a second application capable of using part of information included in a first application;
FIGS. 7A, 7B, 8A, 8B and 9 are conceptual views illustrating a method of switching between a message application and a mail application;
FIGS. 10, 11, 12, 13A, and 13B are conceptual views illustrating a method of switching between SNS applications using different servers;
FIG. 14 is a conceptual view illustrating a method of executing a plurality of applications together when an application is switched a plurality of times;
FIGS. 15A and 15B are conceptual views illustrating a method of performing different functions according to a region to which a touch is applied;
FIG. 16 is a flowchart illustrating a method of controlling screen information according to a type of touch applied on the touch screen. FIGS. 17A and 17B are conceptual views for explaining the control method of FIG. 16;
FIGS. 18A and 18B are conceptual views illustrating an example in which different functions are carried out according to a touch strength of a second type of touch. Furthermore, FIGS. 19A and 19B are conceptual views illustrating an example in which different functions are carried out according to the direction of a touch;
FIGS. 20A, 20B and FIG. 21 are conceptual views illustrating a method of performing different functions according to a type of touch in a gallery application; and
FIGS. 22A, 22B, 23A, and 23B are conceptual views illustrating a method of performing different functions according to a type of touch in a camera application.

### DETAILED DESCRIPTION OF THE INVENTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. Also, it should be understood that the accompanying drawings are merely illustrated to easily explain the concept of the invention, and therefore, they should not be construed to limit the technological concept disclosed herein by the accompanying drawings, and the concept of the present disclosure should be construed as being extended to all modifications, equivalents, and substitutes included in the concept and technological scope of the invention.

It will be understood that, although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

Mobile terminals described herein may include cellular phones, smart phones, laptop computers, digital broadcasting terminals, personal digital assistants (PDAs), portable multimedia players (PMPs), navigators, slate PCs, tablet PCs, ultrabooks, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers and the like, excluding a case of being applicable only to the mobile terminals.

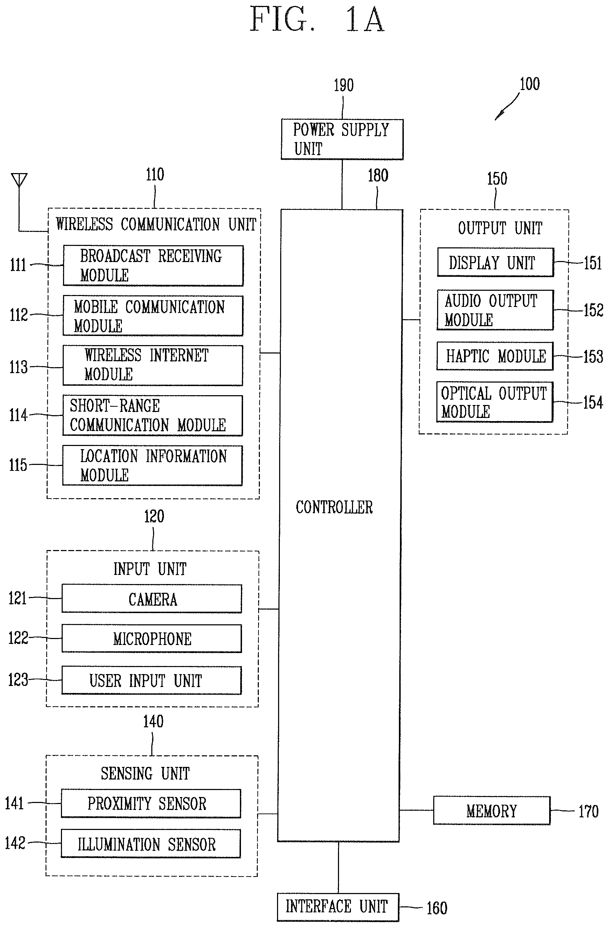

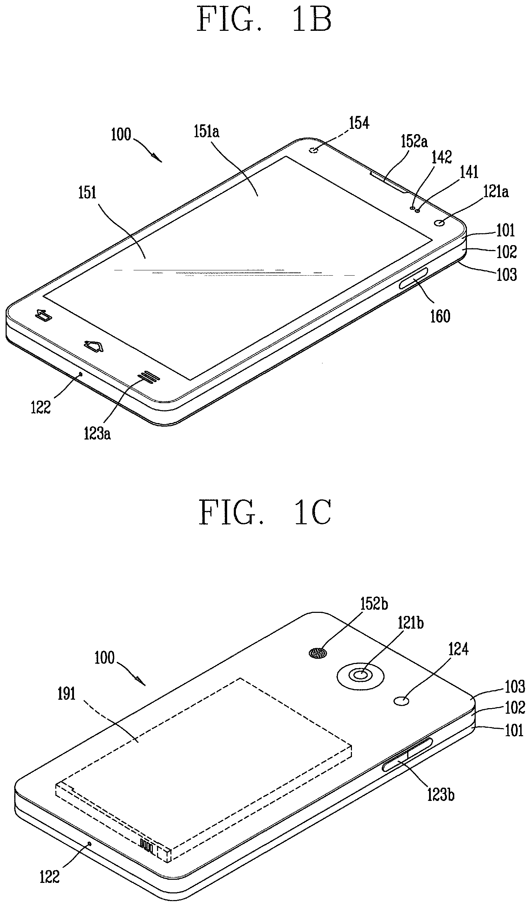

Referring to FIGS. 1A through 1C, FIG. 1A is a block diagram for explaining a mobile terminal associated with the present disclosure, and FIGS. 1B and 1C are conceptual views illustrating an example in which the mobile terminal associated with the present disclosure is seen from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and an external server. In addition, the wireless communication unit 110 may include one or more modules for connecting the mobile terminal 100 to one or more networks.

The wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). The mobile terminal 100 may be configured to utilize information obtained from sensing unit 140, and in particular, information obtained from one or more sensors of the sensing unit 140, and combinations thereof.

The output unit 150 may be configured to output an audio signal, a video signal or a tactile signal. The output unit 150 may include a display unit 151, an audio output module 152, a haptic module 153, an optical output unit 154 and the like. The display unit 151 may have an inter-layered structure or an integrated structure with a touch sensor in order to facilitate a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

In addition, the memory 170 stores data that support various functions of the mobile terminal 100. The memory 170 is typically implemented to store data to support various functions or features of the mobile terminal 100. For instance, the memory 170 may be configured to store application programs executed in the mobile terminal 100, data or instructions for operations of the mobile terminal 100, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

Furthermore, the controller 180 may control at least part of the components illustrated in FIG. 1A, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Furthermore, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and/or a terrestrial channel. At least two broadcast receiving modules 111 may be provided in the portable electronic device 100 to simultaneously receive at least two broadcast channels or switch the broadcast channels.

The mobile communication module 112 may transmit/receive wireless signals to/from at least one of network entities, for example, a base station, an external terminal, a server, and the like, on a mobile communication network, which is constructed according to technical standards or transmission methods for mobile communications (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.)

Here, the wireless signals may include audio call signal, video (telephony) call signal, or various formats of data according to transmission/reception of text/multimedia messages.

The wireless Internet module 113 refers to a module for supporting wireless Internet access, and may be built-in or externally installed on the mobile terminal 100. The wireless Internet module 113 may transmit and/or receive wireless signals via communication networks according to wireless Internet technologies.

Examples of such wireless Internet access may include Wireless LAN (WLAN), Wireless-Fidelity (Wi-Fi), Wireless Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), LTE (Long Term Evolution), LTE-A (Long Term Evolution-Advanced), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LET and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks. The short-range communication module 114 denotes a module for short-range communications.

Here, the another mobile terminal 100 may be a wearable device, for example, a smart watch, smart glasses or a head mounted display (HMD), which is able to exchange data with the mobile terminal 100 (or to like data with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a WiFi module, or both. For example, when the mobile terminal uses the GPS module, a position of the mobile terminal may be acquired using a signal sent from a GPS satellite. As another example, when the mobile terminal uses the WiFi module, a position of the mobile terminal may be acquired based on information associated with a wireless access point (AP) which transmits or receives a wireless signal to or from the Wi-Fi module. According to the need, the location information module 115 may perform any function of the other modules of the wireless communication unit 110 to obtain data on the location of the mobile terminal. As a module used to acquire the location (or current location) of the mobile terminal, the location information module 115 may not be necessarily limited to a module for directly calculating or acquiring the location of the mobile terminal.

The input unit 120 may be configured to provide an audio or video signal (or information) input to the mobile terminal or information input by a user to the mobile terminal. For the input of the audio information, the mobile terminal 100 may include one or a plurality of cameras 121. The camera 121 processes a image frame, such as still picture or video, obtained by an image sensor in a video phone call or image capturing mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. As another example, the cameras 121 may be located in a stereoscopic arrangement to acquire left and right images for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof.

On the other hand, the sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may also be categorized as a proximity sensor.

On the other hand, for the sake of brief explanation, a behavior in which the pointer is positioned to be proximate onto the touch screen without contact will be referred to as "proximity touch," whereas a behavior in which the pointer substantially comes into contact with the touch screen will be referred to as "contact touch." For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, the touch object body may be a finger, a touch pen or stylus pen, a pointer, or the like as an object through which a touch is applied to the touch sensor.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swype touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 constructing the input unit 120 may be a type of camera sensor. The camera sensor may include at least one of a photo sensor (or image sensor) and a laser sensor.

Implementing the camera 121 with a laser sensor may allow detection of a touch of a physical object with respect to a 3D stereoscopic image. The camera 121 and the laser sensor may be combined to detect a touch of the sensing object with respect to a 3D stereoscopic image. More specifically, the photo sensor is integrated with photo diodes and transistors in the rows and columns thereof, and a content placed on the photo sensor may be scanned by using an electrical signal that is changed according to the amount of light applied to the photo diode. Namely, the photo sensor may calculate the coordinates of the sensing object according to variation of light to thus obtain position information of the sensing object.

The display unit 151 may display (output) information processed in the mobile terminal 100. For example, the display unit 151 may display execution screen information of an application program driven in the mobile terminal 100 or user interface (Ul) and graphic user interface (GUI) information in response to the execution screen information.

Furthermore, the display unit 151 may also be implemented as a stereoscopic display unit for displaying stereoscopic images.

The stereoscopic display unit may employ a stereoscopic display scheme such as stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. Also, the audio output module 152 may also provide audible output signals associated with a particular function (e.g., a call signal reception sound, a message reception sound, etc.) carried out by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be configured to transmit tactile effects through a user's direct contact, or a user's muscular sense using a finger or a hand. Two or more haptic modules 153 may be provided according to the particular configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses a user's event checking.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device may be connected with the terminal 100 via the interface unit 160.

Furthermore, when the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Such various command signals or power inputted from the cradle may operate as signals for recognizing that the mobile terminal 100 has accurately been mounted to the cradle.

The memory 170 can store programs to support operations of the controller 180 and store input/output data (for example, phonebook, messages, still images, videos, etc.). The memory 170 may store data associated with various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a state of the mobile terminal meets a preset condition.

Furthermore, the controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the electronic device 100 under the control of the controller 180. The power supply unit 190 may include a battery, which is typically rechargeable or be detachably coupled to the terminal body for charging.

Furthermore, the power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

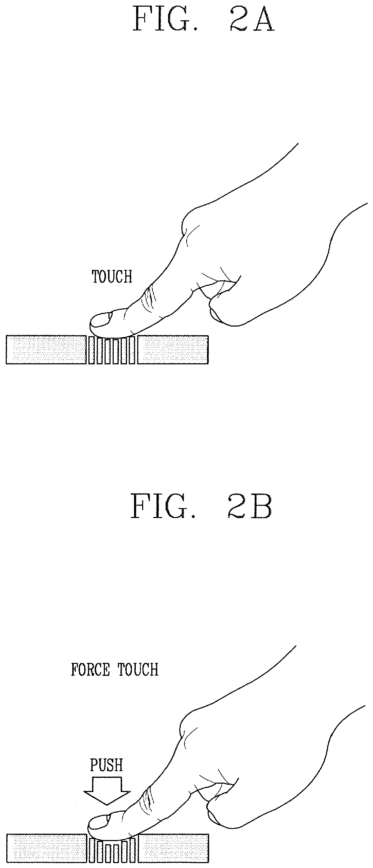

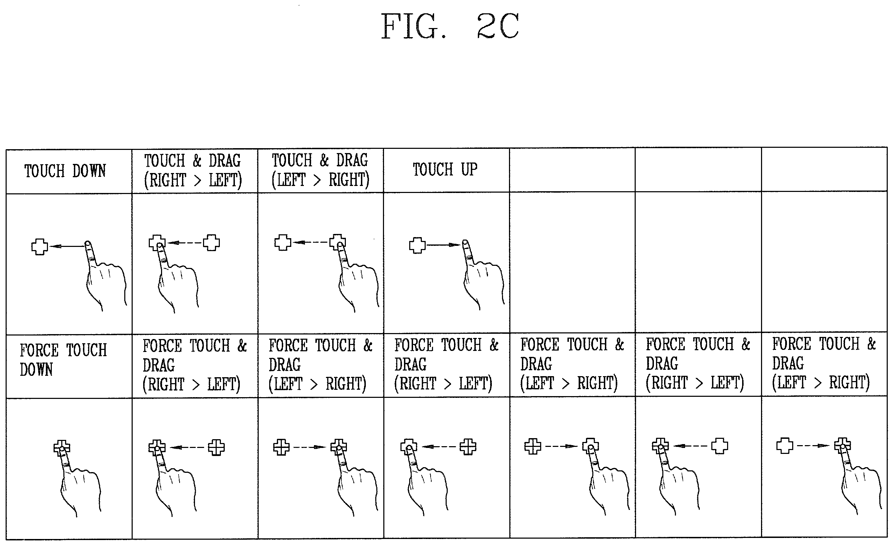

FIGS. 2A, 2B, and 2C are conceptual views illustrating types of touches applied on a touch screen of a mobile terminal according to the present disclosure.

A mobile terminal according to the present disclosure may sense a touch applied to a specific region on a touch screen through a touch object. The touch object may be an object capable of applying a touch such as a finger, a touch pen, a stylus pen, a pointer or the like.

The touch screen may sense at least one of a pressure of a touch applied through the touch object, an area of the touch, and a change of capacitance of the touch.

To this end, the touch screen may further include a touch sensor and a touch pressure sensor.

The touch sensor may be formed to sense a touch applied on the touch screen. In addition, the touch pressure sensor may be formed to sense a touch pressure and a touch area. In other words, the touch pressure sensor senses a pressure of the touch and an area of the touch, thereby detecting a pressure applied to the touch screen by the touch object. The touch sensor and the touch pressure sensor may be separately provided as separate sensors or may be integrally formed as a single unitary body. The touch sensor may be formed to sense a change of capacitance. Hereinafter, the term "sensing portion" is used in case where the touch sensor and the touch pressure sensor are not distinguished from each other, and the terms a "first sensing unit" and a "second sensing unit" are used when referring to the touch sensor and the touch pressure sensor in a distinguished manner.

When sensing a touch on the touch screen, the controller 180 may determine a type of touch based on an input signal corresponding to at least one of a pressure of the touch and a change of capacitance of the touch. The type of the touch may be classified according to an intensity of a pressure of the input signal corresponding to the pressure of the touch. More specifically, the type of the touch may include a first type in which an input signal corresponding to a change of capacitance of the touch and an input signal corresponding to a value less than a preset pressure are sensed, and a second type in which an input signal corresponding to a change of capacitance of the touch and an input signal corresponding to a value greater than a preset pressure is sensed.

For example, as illustrated in FIG. 2A, the controller 180 may sense a first type of touch in which an input signal corresponding to a value less than a preset pressure is sensed on the touch screen. For another example, as illustrated in FIG. 2B, the controller 180 may sense a second type of touch in which an input signal corresponding to a value greater than a preset pressure is sensed on the touch screen.

Hereinafter, for a touch according to an embodiment of the present disclosure, a first type of touch in which a touch object applies a touch with a pressure less than a preset value is used in the same manner as the term "general touch (or touch)", and a second type of touch in which a touch object applies a touch with a pressure above a preset value is used in the same manner as the term "pressure touch".

In addition, the controller 180 may sense the occurrence of a touch event on the touch screen. Referring to FIG. 2C, the touch event may be any one of a touch-down event in which a touch object comes into close contact with the touch screen, a touch-and-drag event in which the touch object comes into contact with the touch screen and then drags subsequent to the contact, and a touch-up event for releasing a contact in a state where the touch object comes into contact with the touch screen.

Furthermore, referring to FIG. 2C, the controller 180 may sense different touch events according to the types of touches applied on the touch screen. More specifically, the touch-down event may include a touch-down event due to a first type of touch and a touch-down event due to a second type of touch.

In addition, the touch-and-drag event may include an event of a first type of touch, and dragging with a pressure less than a preset value subsequent to the first type of touch, an event of a first type of touch, and dragging with a pressure above the preset value subsequent to the first type of touch, an event of a second type of touch, and dragging with a pressure less than a preset value subsequent to the second type of touch, and an event of a second type of touch, and dragging with a pressure above a preset value subsequent to the second type of touch.

Moreover, the touch-up event may include an event in which the sensing of a touch is terminated while the first type of touch is sensed on the touch screen, and an event in which the sensing of a touch is terminated while the second type of touch is sensed on the touch screen.

The types of touches and touch events for allowing the controller 180 to sense the touches applied on the touch screen according to an embodiment of the present disclosure have been described above. Hereinafter, a method of controlling an application installed on the mobile terminal according to the sensible type of touch and the touch event will be described.

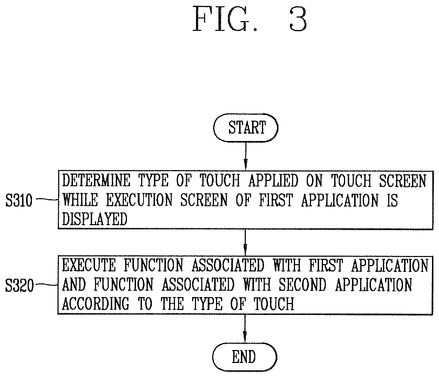

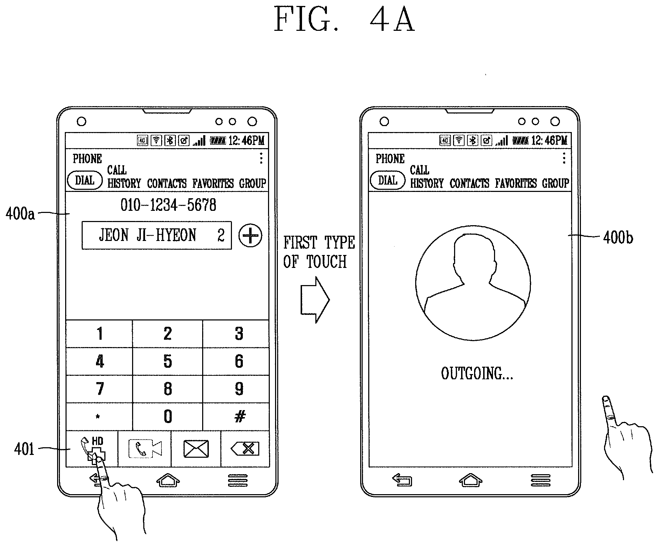

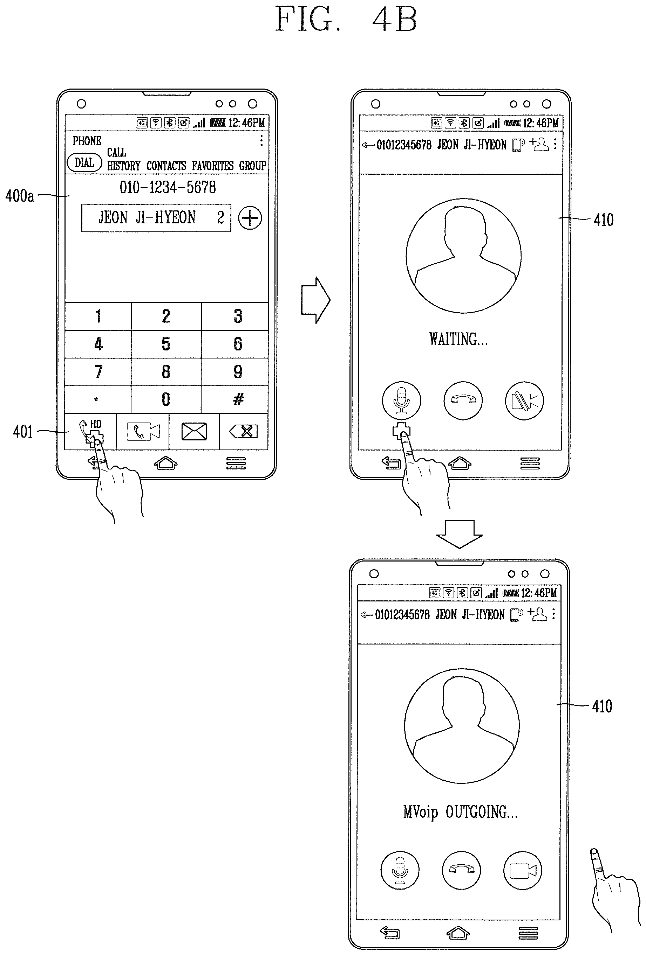

FIG. 3 is a flowchart illustrating a method of switching between different applications installed on a mobile terminal according to an embodiment of the present disclosure. FIGS. 4A and 4B are conceptual views illustrating the control method of FIG. 3.

First, a mobile terminal according to an embodiment of the present disclosure may determine the type of touch applied on the touch screen in a state where an execution screen of a first application is displayed (S310).

On a mobile terminal according to an embodiment of the present disclosure, at least one application may be installed. Here, the application may refer to an application capable of executing functions that are executable on the mobile terminal. The application may be installed at the time of factory setting of the mobile terminal or may be installed on the mobile terminal by receiving an execution file from an external server (for example, Google Play) or an external terminal through wireless communication.

The controller 180 may execute a first application among at least one application installed on the mobile terminal. At this time, the user may execute the first application based on a touch applied to an icon associated with the first application. When the first application is executed, the controller 180 may display an execution screen of the first application on the touch screen 151.

The execution screen of the first application may include graphical objects associated with the functions of the first application. The graphic objects associated with the functions of the first application may include all visual information associated with the first application, such as control icons, characters, images, videos, and the like, for controlling the functions of the first application.

The controller 180 may sense a touch applied to the touch screen in a state where the execution screen of the first application is displayed. In other words, the controller 180 may sense that a touch-down event occurs in which a touch object touches the touch screen at a position close to the touch screen.

A touch for generating the touch-down event may be applied to an region where one of the graphic objects included in the execution image of the first application is displayed. For example, as illustrated in the first drawing of FIG. 4A, when the first application is a call application, the controller 180 may sense a touch applied to any one graphic object 401 associated with a function of transmitting or connecting a call signal among graphic objects included in an execution screen 400a of the call application.

Alternatively, although not shown in the drawing, a touch for generating the touch-down event may also be applied a region where the graphic object is not displayed.

When the touch-down event occurs, the controller 180 may determine the type of touch that has generated the touch-down event. For example, the type of touch that has generated the touch-down event may be a first type of touch or a second type of touch.

Furthermore, the controller 180 may determine that a touch-and-drag event has occurred when a drag consecutive to a touch that has generated the touch-down event is applied. In this case, the controller 180 may determine the type of touch that has generated the touch-and-drag event. For example, the type of a touch that has generated the touch-and-drag event may be a second type of touch and a drag applied with a pressure less than a preset value subsequent to the second type of touch.

In addition, when the contact of the touch is released subsequent to the occurrence of the touch-down event, the controller 180 may determine that a touch-up event has occurred.

Subsequent to determining the type of the touch, the controller 180 of the mobile terminal according to an embodiment of the present disclosure may carry out the process of executing at least one of a function associated with the first application and a function associated with the second application according to the type of the applied touch (S320).

The controller 180 may execute at least one of a function associated with the first application and a function associated with the second application according to the type of the applied touch.

The first application and the second application may be applications that perform the same or similar functions. Alternatively, the first application and the second application may be applications in which information used in the first application and information used in the second application are the same or similar information. Alternatively, the first application and the second application may be applications that use the same information in different ways. Alternatively, the first application and the second application may be applications that use the same information in different ways.

For example, the first application may be an application for transmitting or connecting a call signal by the control of a telecommunications carrier (e.g., KT, SK Telecom, Verizon, T-Mobile), and the second application may be an application (e.g., KakaoTalk, Hangouts, etc.) for transmitting or connect a call signal through a general Internet network under the control of an application developer (for example, Daum Kakao, Google, etc.).

For another example, the first application may be an application that uses a voice call or a video call scheme defined by a wireless communication standardization organization such as 3rd Generation Partnership Project (3GPP), and the second application may be an application using a voice call or video call through a general Internet communication scheme or a general packet communication scheme without using the voice call or video call scheme.

For still another example, the first application may be an application for transmitting or connecting a call signal through a Public Switched Telephone Network (PSTN) scheme, and the second application may be an application for transmitting or connecting a call signal through a Mobile Voice over Internet Protocol (MVoIP) scheme.

For still another example, the first application may be an application for transmitting or connecting a call signal through a Voice over Long Term Evolution (VoLTE) scheme, and the second application may be an application for transmitting or connecting a call signal through a Mobile Voice over Internet Protocol (MVoIP) scheme.

For yet still another example, the first application may be an application for sending or receiving a short messaging service (SMS) or a multimedia messaging service (MMS) through a telecommunications carrier, and the second application may be an application (e.g., KakaoTalk, Facebook Messenger) for sending or receiving a message through an application server.

The second application may be prestored in the memory 170 to match with the first application or detected by the controller 180 based on the attribute information of the first application.

For example, when the first application is being executed, the controller 180 may detect at least one candidate application that can be a second application, based on the attribute information of the first application. The attribute information of the first application may be the type information of the first application. For example, when the first application is a message application for sending a message using a first server, the second application may be a message application for sending a message using a second server.

For another example, when the first application is being executed, the controller 180 may detect at least one candidate application matched with the first application from the memory 170.

In addition, there may be a plurality of second applications. In this case, the controller 180 may set priorities among a plurality of applications based on the usage patterns of a plurality of applications. Here, the usage pattern may include a usage frequency indicating a number of executions of the application. For example, the controller 180 may sequentially set priorities from an application having the highest usage frequency among a plurality of applications.

In this case, the controller 180 may set the application having the highest priority as the second application. In addition, when switching between applications, the controller 180 may sequentially switch applications based on the priorities.

On the other hand, when a touch-down event is generated by a touch applied on the execution screen of the first application, the controller 180 may determine a touch type of the touch. When a touch-up event occurs subsequent to the occurrence of the touch-down event, the controller 180 may execute at least one of a function associated with the first the first application and a function associated with the first the second application according to the type of the touch.

More specifically, the controller 180 may execute a function associated with the first application when a touch-up event occurs subsequent to the occurrence of a touch-down event due to a first type of touch. For example, as illustrated in the first drawing of FIG. 4A, the controller 180 may sense a first type of touch applied to a graphic object 401 associated with a call signal transmission function among graphics objects included in an execution screen 400a of a first application for transmitting a call signal in a PSTN scheme. Then, as illustrated in the second drawing of FIG. 4A, the controller 180 may perform a function of transmitting a call signal in a PSTN scheme in response to the occurrence of a touch-up event. In this case, an execution screen 400b indicating that a call signal is being transmitted in a PSTN scheme may be displayed on the display unit 151.

On the contrary, as illustrated in the first drawing of FIG. 4B, the controller 180 may sense a second type of touch applied to a graphic object 401 associated with a call signal transmission function among graphics objects included in an execution screen 400a of the first application.

In this case, the controller 180 may switch the first application for transmitting a call signal in a PSTN scheme to the second application for transmitting a call signal in an MVolP scheme. When the first application is switched to the second application, as illustrated in the second drawing of FIG. 4B, the controller 180 may display an execution screen 410 of the second application for transmitting a call signal in an MVolP scheme on the display unit 151. Alternatively, although not shown in the drawing, the execution screen of the second application may be displayed as a pop-up window on the execution screen of the first application. Alternatively, the execution screen 410 of the second application may be a captured screen of the execution screen 410 of the second application without actually executing the second application. In this case, the controller 180 may execute the second application when the touch is released while the captured screen is being displayed.

As illustrated in FIG. 4B, when the execution screen 410 of the second application is displayed, the controller 180 may transmit a call signal in an MVolP scheme in response to the occurrence of a touch-up event. Through this, the user may conveniently perform switching and execution between applications through a single touch input.

In addition, when the second application is executed, the controller 180 may transfer (or transmit) at least one of information entered from the user during the execution of the first application and information extracted on the memory 170 based on the entered information to the second application to be used in the second application.

In this case, the transferred information may be displayed on the execution screen of the second application to execute a function associated with the second application using the transferred information.

For example, the controller 180 may receive phone number information from the user during the execution of the first application. When the first application is switched to the second application, the controller 180 may transmit the phone number information to the second application.

For another example, when phone number information or name information is entered from the user during the execution of the first application, the controller 180 may extract the identification information of a specific person on the memory 170 based on the entered phone number information or name information.

Then, the controller 180 may switch the first application to the second application to execute the second application. In this case, the controller 180 may transfer at least one of the phone number information, the name information, and the identification information of the specific person to the second application.

Therefore, when the first application is switched to the second application, the user may use the information received during the execution of the first application in the second application without entering the information again.

Meanwhile, when the controller 180 transfers information received from the user and information extracted from the memory 170 based on the received information to the second application, the controller 180 may determine whether or not the transferred information is available in the second application. Whether or not the transferred information is available is whether or not the transferred information is available upon the execution of a function associated with the second application. For example, when the transferred information is the phone number information of a specific person, and a function associated with the second application is a function of transmitting a message through a specific server, the controller 180 may determine whether or not the phone number information is available according to whether or not information corresponding to the phone number information is stored in the specific server.

If the information corresponding to the phone number information of the specific person is not stored in the specific server, the controller 180 is unable to transmit a message to an external terminal corresponding to the phone number information of the specific person through the second application. In this case, the controller 180 may display notification information indicating that the information corresponding to the phone number information of the specific person is not available in the second application, or may terminate the second application. Alternatively, the controller 180 may switch the second application to a third application different from the second application, or switch to the first application again.

On the contrary, when the information corresponding to the phone number information of the specific person is stored in the specific server, the controller 180 may transmit a message to an external corresponding to the phone number information of the specific person through the second application based on the occurrence of a touch-up event.

In the above, a method of switching between applications according to a type of touch applied on the touch screen and performing a function associated with the switched application has been described. Accordingly, the present disclosure may easily switch between applications that perform the same or similar functions according to the type of touch. Furthermore, the present disclosure may conveniently a function by sharing information when switching between the same or similar applications.

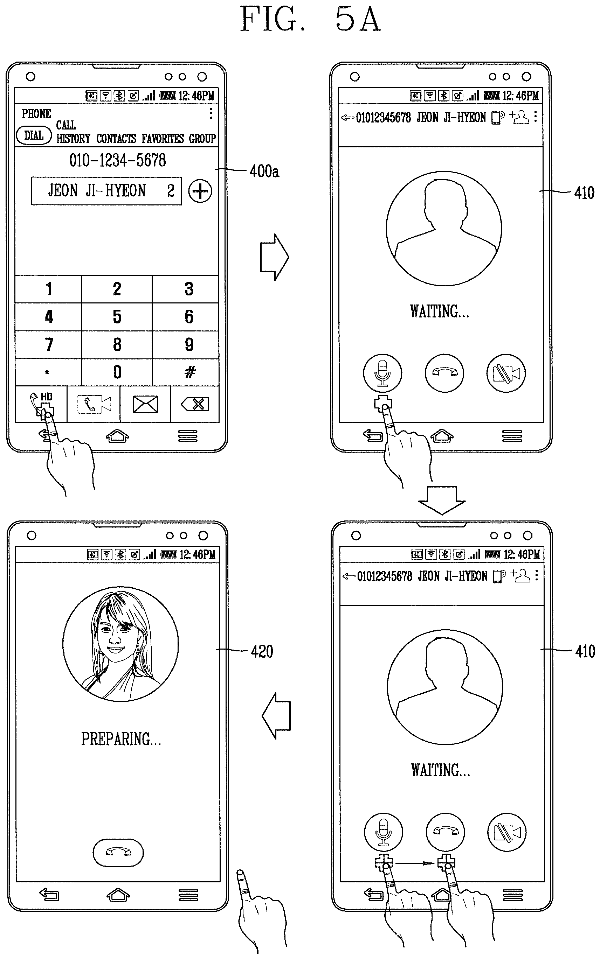

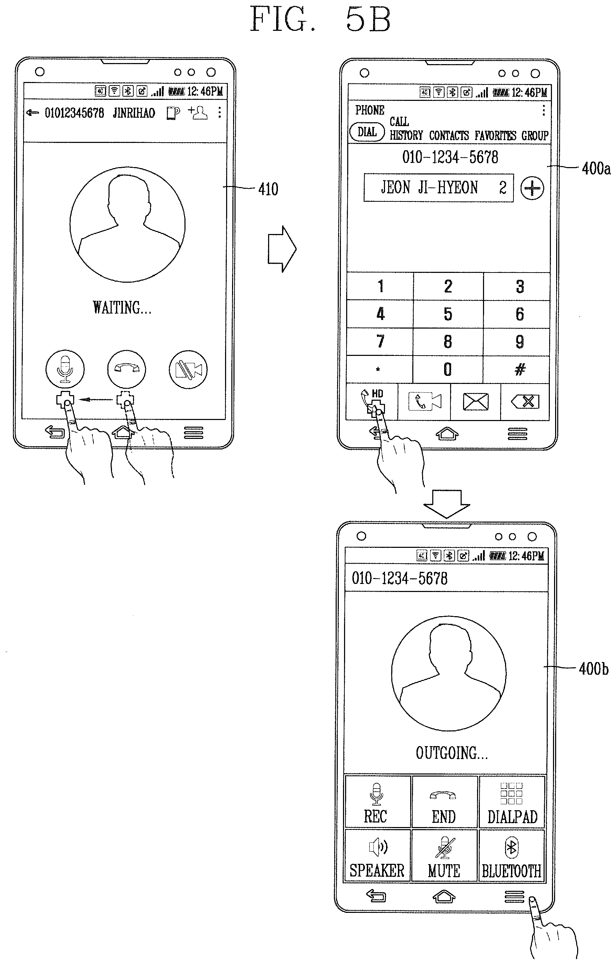

Hereinafter, a method of switching between applications according to the type of touch applied on the touch screen will be described in more detail. FIGS. 5A and 5B are conceptual views illustrating a method of switching between applications according to a type of touch applied on the touch screen.

The controller 180 of the mobile terminal according to an embodiment of the present disclosure may switch the first application to the second application according to the type of touch applied on the touch screen while the execution screen of the first application is displayed on the touch screen.

The switching of an application may denote changing an application being executed in the foreground from a first application to a second application. At this time, the first application may be executed in the background. When the application is switched, the execution screen of the first application disappears and the execution screen of the second application is displayed on the touch screen.

Alternatively, when the application is switched, the controller 180 may display an execution screen of the second application in the form of a pop-up window on at least part of the execution screen of the first application.

More specifically, the controller 180 may sense the occurrence of a touch-down event when the first application is executed. In this case, the controller 180 may determine the type of touch that has generated the touch-down event. If the type of touch is a first type of touch, and the touch-up event occurs after the touch-down event, the controller 180 may execute a function associated with the first application.

On the contrary, the controller 180 may switch the first application to the second application when the type of touch is a second type of touch. In addition, when switched to the second application, the controller 180 may display the execution screen of the second application on the display unit 151 based on a touch being consecutively sensed subsequent to the second type of touch.

For example, as illustrated in the first drawing of FIG. 5A, when a touch applied on the touch screen is a second type of touch while the execution screen 400a of the first application is displayed, the controller 180 may switch the first application to the second application. In this case, as illustrated in the second drawing of FIG. 5A, on the touch screen, on the basis of continuous touch detection of the second type of touch, the execution screen 400a of the first application may be changed and displayed with execution screen 410 of the second application based on a touch being consecutively sensed subsequent to the second type of touch.

Subsequent to switching the first application to the second application, the controller 180 may sense a touch being dragged subsequent to the second type of touch. In other words, the controller 180 may sense the occurrence of a touch-and-drag event. In this case, the controller 180 may switch the second application to a third application in response to a touch being dragged subsequent to the touch. The third application may be an application that performs the same or similar function as the first and second applications. In other words, the third application may be one of candidate applications.

For example, as illustrated in the third drawing of FIG. 5A, when it is sensed that a touch is dragged from left to right subsequent to a second type of touch applied on the touch screen while the execution screen 410 of the second application is displayed, the controller 180 may switch the second application to the third application. In this case, as illustrated in the fourth drawing of FIG. 5A, the execution screen 410 of the second application may be changed and displayed as the execution screen 420 of the third application on the touch screen. In addition, when the execution screen 420 of the third application is displayed, the controller 180 may execute a function associated with the third application when a touch-up event occurs.

In other words, according to the present disclosure, switching between applications may be continuously carried out based on the touch being continuously held until a touch-down event occurs subsequent to the occurrence of the touch-up event.

Furthermore, the controller 180 may switch the second application to the first application other than the third application based on the direction of a drag consecutive to a touch applied on the touch screen. For example, as illustrated in the first drawing of FIG. 5B, when it is sensed that a touch is dragged from right to left subsequent to a second type of touch applied on the touch screen while the execution screen 410 of the second application is displayed on the touch screen, the controller 180 may switch the second application to the first application. In this case, as illustrated in the second drawing of FIG. 5B, the execution screen 410 of the second application may be changed and displayed as the execution screen 400a of the first application on the touch screen.

In addition, while the execution screen 420 of the first application is displayed, the controller 180 may execute a function associated with the first application when a touch-up event occurs. For example, as illustrated in the third drawing of FIG. 5B, when the occurrence of a touch-up event is sensed while the execution screen 400a of the first application is displayed, a function for transmitting a call signal in a PSTN scheme may be executed, and the execution screen 400b associated therewith may be displayed on the touch screen.

In other words, according to the present disclosure, when the switching of an application is additionally carried out subsequent to performing the switching of the application, switching to the application prior to the switching or a new application may be carried out according to the direction of a drag.

Furthermore, present disclosure may perform switching between different applications according to the drag direction of touches consecutively applied until a touch-up event of a single touch input occurs subsequent to the occurrence of the touch input.

In addition, the present disclosure may perform switching between applications through a single touch input, thereby more easily selecting an application.

On the other hand, when there are a plurality of candidate applications matched with the first application, the controller 180 may switch an application based on the priorities. The priorities may be set based on the usage patterns of applications. For example, the controller 180 may set the priority to be higher as the usage frequency of the application is higher.

For example, the controller 180 may perform switching of an application in the order of a first application, a second application, and a third application based on the usage frequencies of the applications.

In this case, when a usage pattern between applications is changed, the controller 180 may change the priorities. For example, when the usage frequency of the third application is higher than that of the second application, the controller 180 may perform switching of the applications in the order of the first application, the third application, and the second application.

Meanwhile, when switching the application, the controller 180 may transfer specific information included in an application being executed before switching to an application being executed after switching. The specific information may be information received from a user or information extracted from the memory 170 based on the received information. For example, the specific information may be phone number information of an external terminal, text information received through the user input unit, and the like. Therefore, the present disclosure may execute a function associated with an application being executed after switching, using specific information included in an application being executed before switching, through the application being executed after switching.

When specific information is transferred to the second application, the controller 180 may control the second application to use the specific information during the execution of a function associated with the second application. For example, when the phone number information of an external terminal included in the first application for transmitting a call signal in a PSTN scheme is transferred to the second application for transmitting a message, the controller 180 may control the second application to transmit a message to an external terminal corresponding to the phone number information.

A method of transmitting and using information will be substituted by the earlier description of FIGS. 3, 4 and 6.

In the above, a method of switching an application based on a type of touch applied on the touch screen has been described. Through this, the present disclosure may easily perform switching between applications. Furthermore, the present disclosure may transfer specific information associated with an application at the time of switching the application, thereby improving user convenience.

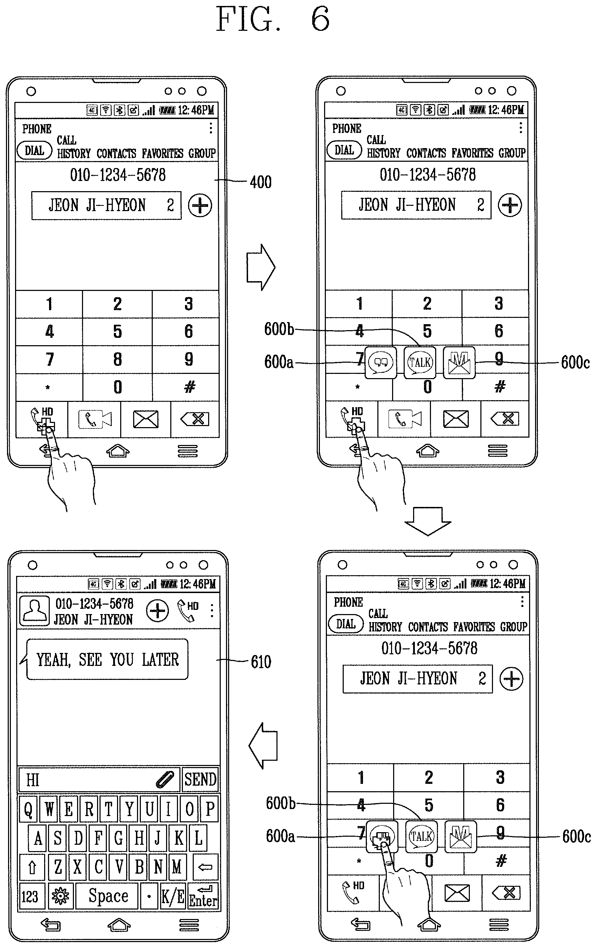

Hereinafter, a method of providing a list of candidate applications for a second application capable of using part of information included in a first application will be described. FIG. 6 is a conceptual view illustrating a method of providing a list of candidate applications for a second application capable of using part of information included in a first application.

The controller 180 of the mobile terminal according to an embodiment of the present disclosure may determine the type of touch when a touch is applied on the touch screen while the execution screen of the first application is displayed.

As a result of the determination, when the touch is a first type of touch, the controller 180 may execute a function associated with the first application.

On the contrary, as a result of the determination, when the touch is a second type of touch, the controller 180 may switch to at least one application different from the first application.

At this time, when there is a plurality of the at least one application and priorities among them is not set, the controller 180 may displays an app list including items corresponding to an icon of the at least one application on the touch screen.

For example, as illustrated in the first drawing of FIG. 6, the controller 180 may sense a second type of touch in a state where the execution screen 400 of the first application for transmitting a call signal in a PSTN scheme is displayed. In this case, as illustrated in the second drawing of FIG. 6, the controller 180 may display a message application icon 600a capable of using the identification information of an external terminal included in the first application, a social networking service (SNS) application icon 600b, and a mail application icon 600c on the touch screen. Here, the identification information of the external terminal may be information capable of identifying an external terminal, such as phone number information, identification (ID) information, a mail address, a name, and the like.

At this time, as illustrated in the third drawing of FIG. 6, the controller 180 may execute a message application in response to a first type of touch applied to the message application icon 600a among the message application icon 600a, the social networking service (SNS) application icon 600b, and the mail application icon 600c.

Furthermore, the controller 180 may transfer the identification information of an external terminal to the message application so as to be available for use. For example, as illustrated in the fourth drawing of FIG. 6, the controller 180 may display the phone number information on an input window for entering a phone number of an external terminal included in the execution image of the message application to transmit a message to an external terminal corresponding to the phone number information. In other words, the user may execute a message transmission function to transmit a message to an external terminal corresponding to the identification information through the message application, without additionally entering the identification information of the external terminal.

Therefore, the present disclosure may transfer information included in an application before switching to an application after switching at the time of switching between applications, thereby performing organic switching between applications.

In the above, a method of transferring specific information included in an application when switching between applications has been described.

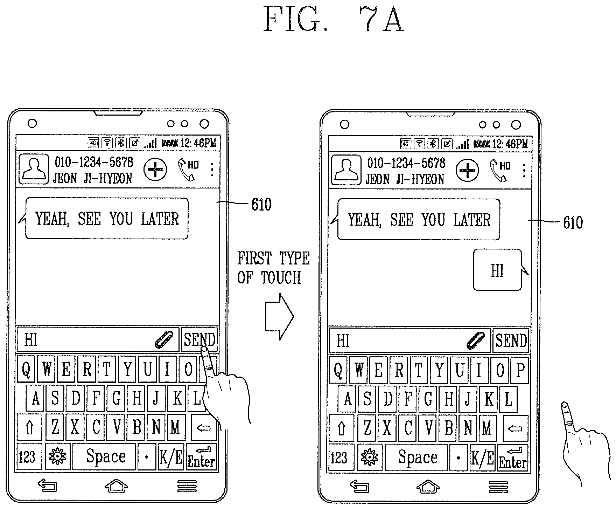

Hereinafter, a method of switching among a message application, a memo application, and a mail application will be described. FIGS. 7A, 7B, 8A, 8B and 9 are conceptual views illustrating a method of switching between a message application and a mail application.

The controller 180 of the mobile terminal according to an embodiment of the present disclosure may sense a touch a region of the touch screen in a state where an execution screen 610 of a message application is displayed on the touch screen. More specifically, the controller 180 may sense a touch applied to a region displayed with any one of a plurality of graphic objects included in the execution image 610 of the message application. For example, as illustrated in the first drawing of FIG. 7A, the controller 180 may sense a touch applied to a graphic object that controls a message transmission function.

The controller 180 may determine the type of the touch, and execute at least one of a function associated with the first application and a function associated with the second application according to a result of the determination.

For example, as illustrated in the second drawing of FIG. 7A, the controller 180 may perform a function of transmitting input information input to the message application in response to a first type of touch being applied.

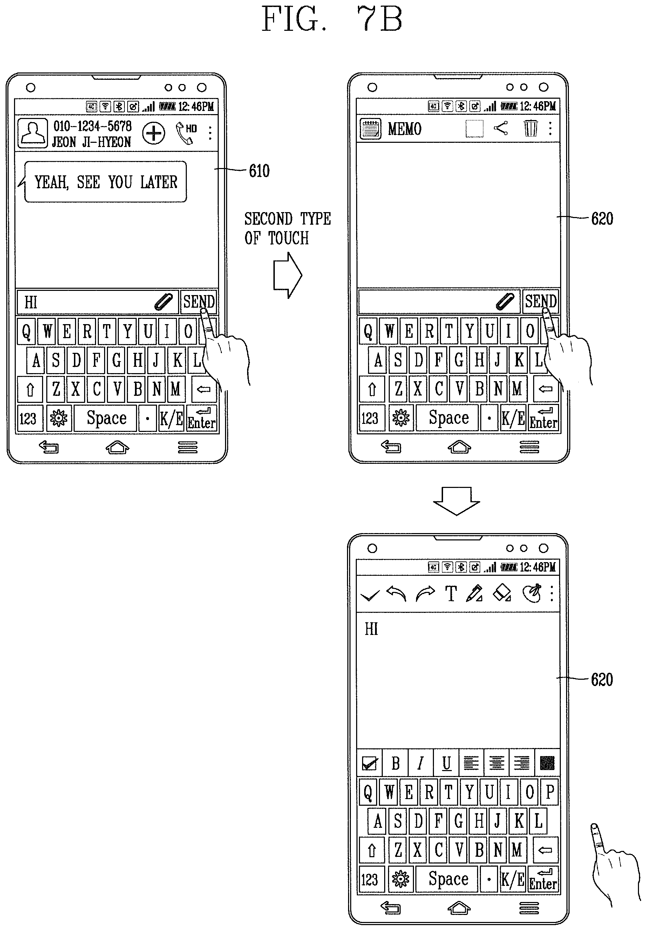

On the contrary, as illustrated in FIG. 7B, the controller 180 may switch from the message application to a memo application in response to a second type of touch being applied. In this case, the controller 180 may transfer input information entered in the message application to a memo application as the input information of the memo application. For example, as illustrated in FIG. 7B, the controller 180 may display input information "Hello" as a memo on the execution screen 620 of the memo application.

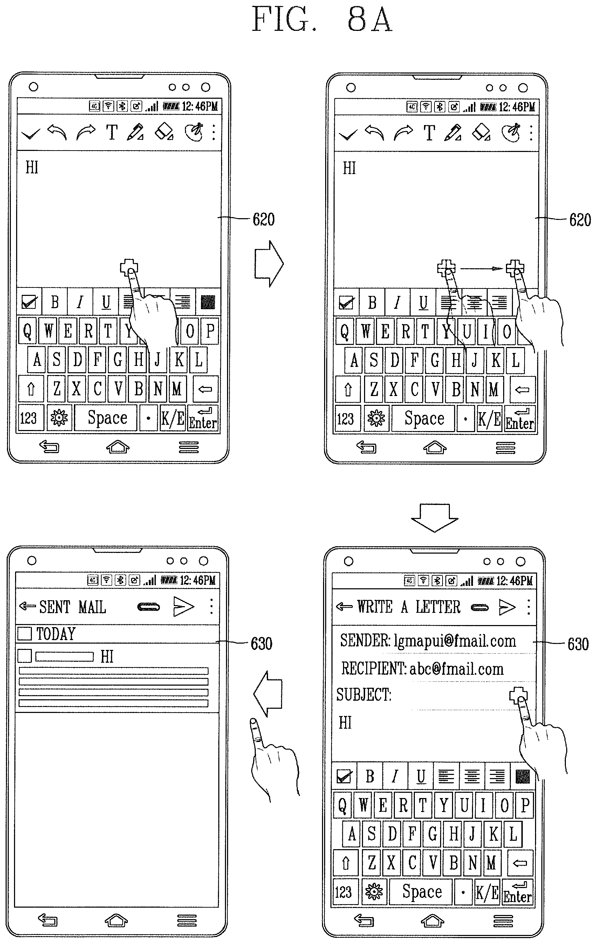

Furthermore, as illustrated in the second drawing of FIG. 8A, when a drag consecutive to the second type of touch is directed from left to right after switching to the memo application, the controller 180 switches the application to a mail application.

When switching the memo application to a mail application, the controller 180 may transfer at least one of the identification information of an external terminal included in the message application, input information received from the user, and information extracted from the memory 170 based on the input information to the mail application. For example, as illustrated in the third drawing of FIG. 8A, the controller 180 may display a mail address associated with an external terminal and "Hello" as the content of a mail on an execution screen 630 of the mail application.

Then, the controller 180 may not switch the application any more based on the occurrence of a touch-up event. In this case, an execution screen of the mail application may be displayed on the display unit 151. Alternatively, based on the occurrence of a touch-up event, the controller 180 may execute a mail function using at least one of the identification information of an external terminal transferred from the memo application, input information received from the user, and information extracted from the memory 170 based on the input Information. For example, as illustrated in the fourth drawing of FIG. 8A, the controller 180 may transmit a mail containing input information received from the user to an external terminal corresponding to the identification information of the external terminal transferred from the memo application.

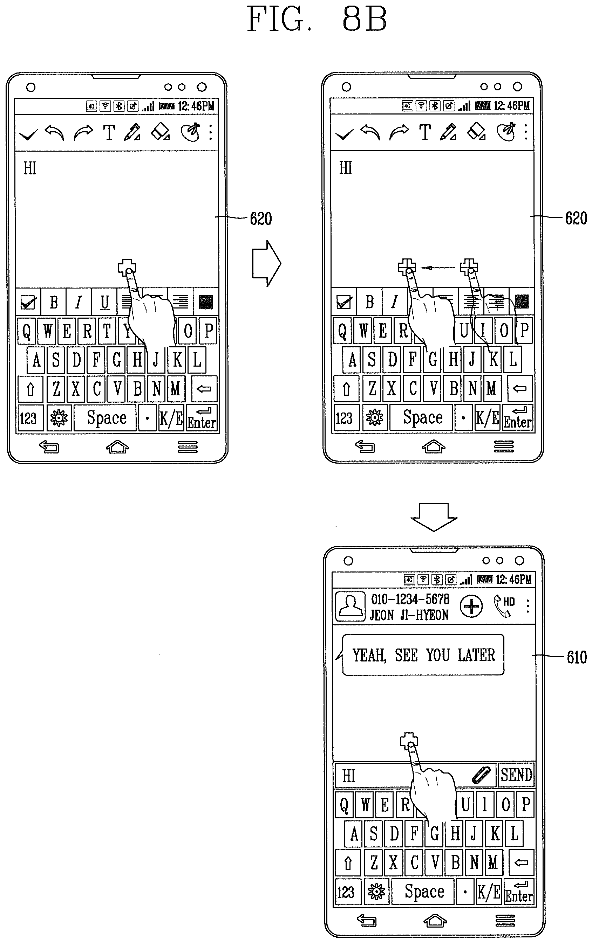

Furthermore, the controller 180 switch to different applications according to the type of a drag consecutive to the second type of touch being applied on the execution screen of the second application. For example, as illustrated in the second and third drawings of FIG. 8B, when a drag consecutive to the second type of touch is directed from right to left while the execution screen 620 of the memo application is displayed, the controller 180 may switch to a message application that has been executed before switching to the memo application.

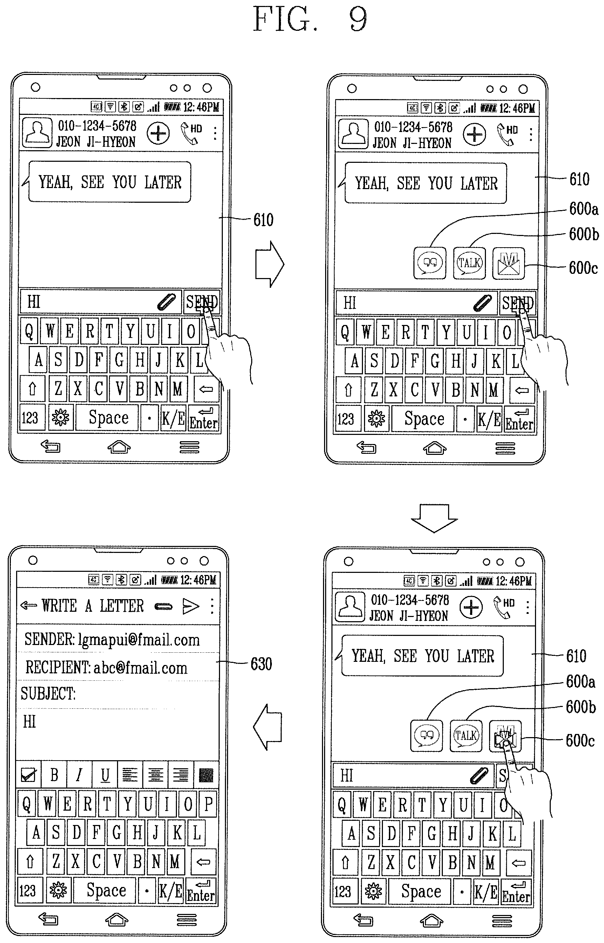

In addition, when a second type of touch is applied while the execution screen 610 of the message application is displayed, the controller 180 may detect a plurality of applications capable of performing application switching. When a plurality of applications are detected, the controller 180 may display respective icons for the plurality of applications on the touch screen. For example, as illustrated in the first and second figures of FIG. 9, the controller 180 may display an icon 600a of another message application, an icon 600b of an SNS application, and an icon 600c of a mail application in response to a second type of touch being applied on the execution screen 610 of the message application.

At this time, as illustrated in the third drawing of FIG. 9, the controller 180 may sense a touch being applied to the icon 600c of the mail application. In this case, the controller 180 may switch the message application to the mail application. At this time, as illustrated in the fourth drawing of FIG. 9, the execution screen 630 of the mail application may include the identification information of an external terminal transferred from the message application and input information received from the user.

The switching order of the applications may be a preset order or may be changed according to the usage patterns of the applications.

In the above, a method of switching among a message application, a memo application, and a mail application has been described.

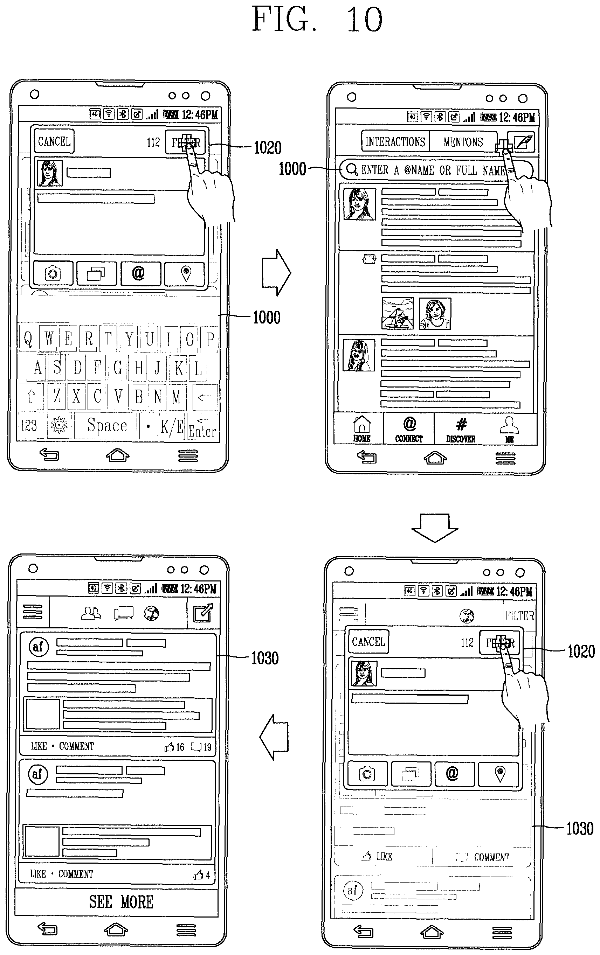

Hereinafter, a method of switching between SNS applications using different servers will be described. FIGS. 10, 11, 12, 13A, and 13B are conceptual views illustrating a method of switching between SNS applications using different servers.

A plurality of SNS applications using different servers may be installed in a mobile terminal according to an embodiment of the present disclosure. In other words, the plurality of SNS applications may have different providers who provide social networking services. Here, the SNS application is an application program that provides a function of transmitting a message or allowing a plurality of users to upload information to one external server to share the information.

The controller 180 may execute any one of the plurality of SNS applications. At this time, the controller 180 may switch the any one application to another application based on the type of touch applied on the touch screen while the execution screen of the any one application is displayed.

In addition, during the switching of the application, the controller 180 may transmit input information received through the user input unit to an external server that provides the any one application. In other words, when input information received from the user exists during the switching of the application, the present disclosure may perform a function associated with an application currently being executed and a switching function of an application at the same time.

For example, as illustrated in the first drawing of FIG. 10, the controller 180 may display an execution screen 1000 of the first application among a plurality of SNS applications 1020 and a pop-up window for displaying input information received through the user input unit on the touch screen. At this time, the controller 180 may sense a touch on a region where a graphic object associated with a function of transmitting to an external server is displayed on the pop-up window 1020.

On the other hand, as illustrated in the second drawing of FIG. 10, when the sensed touch is a second type of touch, the controller 180 may transmit input information displayed on the pop-up window 1020 to a server that has provided the first application, and display screen information indicating that the input information has been transmitted to the server that has provided the first application on the touch screen.

Furthermore, the controller 180 may execute the second application among a plurality of SNS applications, together with the transmission of the input information displayed on the pop-up window 1020 to the server that has provided the first application. In this case, as illustrated in the third drawing of FIG. 10, the controller 180 may display an execution screen 1030 of the second application on the touch screen.

In addition, the controller 180 may display the pop-up window 1020 containing the input information received through the user input unit again on the execution screen 1030 of the second application, based on the second type of touch being held.

Then, the controller 180 may transmit the input information received through the user input unit to the server that has provided the second application based on the occurrence of the touch-up event while the pop-up window 1020 is displayed,. In this case, as illustrated in the fourth drawing of FIG. 10, the controller 180 may display an execution screen 1030 of the second application indicating that the input information has been transmitted to the server that has provided the second application .

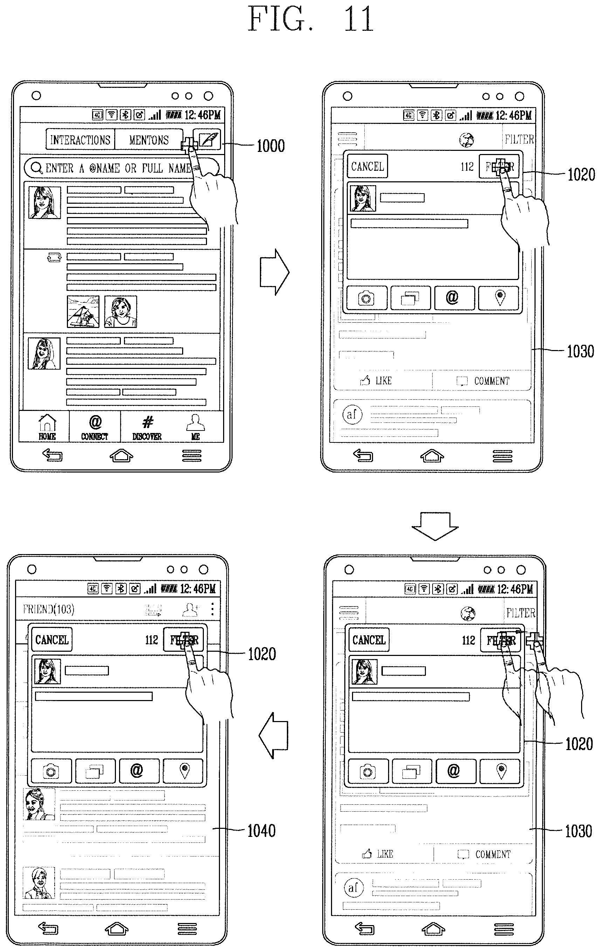

In addition, the controller 180 may select a server to which the input information is to be transmitted. More specifically, as illustrated in the first and second drawings of FIG. 11, the controller 180 may transfer the input information to the server that has provided the first application, and then execute the second application.

At this time, the controller 180 may switch the second application to a third application without transmitting the input information to the server that has provided the second application based on a drag consecutive to the second type of touch being applied. In other words, as illustrated in the third and fourth drawings of FIG. 11, the controller 180 may switch the second application to the third application based on a drag consecutive to the second type of touch being applied. In this case, the controller 180 may not transmit the input information to the server that has provided the second application, unlike the second type of touch being held.

In other words, the user may select whether or not each application uses the input information while performing switching between different applications through one touch operation.

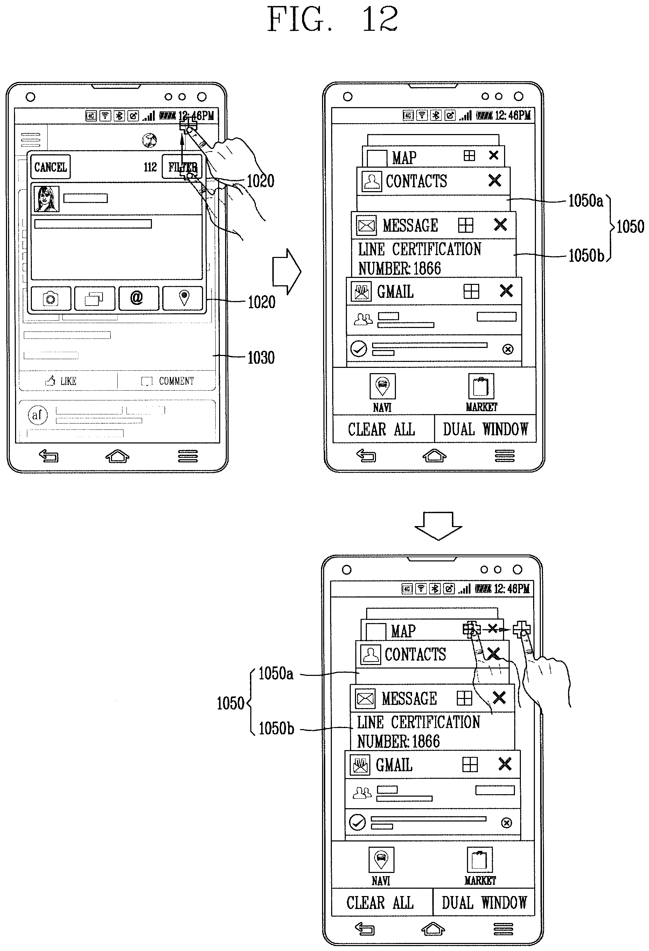

In addition, the controller 180 may transmit the input information received once through the user input unit to all of at least one application capable of using the input information. For example, as illustrated in the first and second diagrams of FIG. 12, the controller 180 may display a thumbnail image corresponding to at least one application 1050 in which the input information is available for use in response to a second type of touch and a drag consecutive to the second type of touch being applied in an upward direction from the bottom to the pop-up window 1020 containing the input information received through the user input unit. For example, as illustrated in the second drawing of FIG. 12, the controller may display a thumbnail image 1050a of an contact application, a thumbnail image 1050b of a message application, a thumbnail image of a mail application, and the like capable of using the input information as an input.

In a state where the thumbnail image of the at least one application 1050 is displayed, the controller 180 may transmit all of the input information to the at least one application 1050 based on the sensing of a second type of touch and a drag consecutive to the touch being directed from left to right. In this case, although not shown in the drawing, the input information may be included on the execution screen of each application.

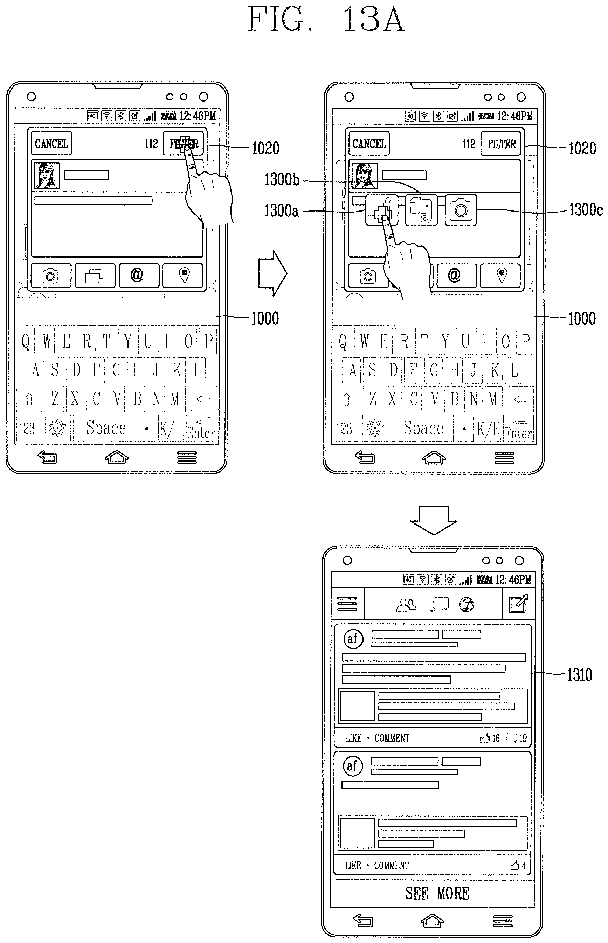

In addition, when the switching order is not set between the plurality of SNS applications, the controller 180 may display icons corresponding to the plurality of SNS applications on the touch screen. More specifically, as illustrated in the first drawing in FIG. 13A, the controller 180 may display icons 1300a, 1300b, 1300c corresponding to the plurality of SNS applications, respectively, based on a second type of touch being applied to the pop-up window 1020 containing the input information.

At this time, as illustrated in the second drawing of FIG. 13A, the controller 180 may transmit the input information to a server that has provided an application corresponding to a specific icon 1300a in response to a touch being applied to the specific icon 1300a among the plurality of icons 1300a, 1300b, 1300c. In this case, as illustrated in the third drawing of FIG. 13A, an execution screen 1310 that has transmitted the input information to a server that has provided an application corresponding to the specific icon 1300a may be displayed on the touch screen.

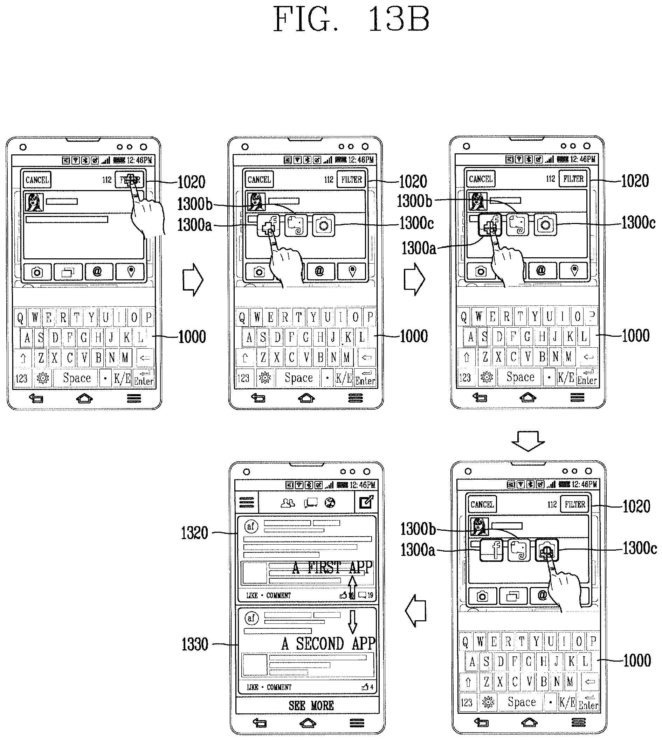

Furthermore, the controller 180 may select at least two or more icons of the plurality of icons 1300a, 1300b, 1300c, and transmit the input information together with applications corresponding to the selected at least two icons. For example, as illustrated in the first through third drawings of FIG. 13B, the controller 180 may sense a second type of touch being applied to any one 1300a of the plurality of icons 1300a, 1300b, 1300c. In this case, the controller 180 may set the any one icon 1300a to a selected state.

In addition, as illustrated in the fourth drawing of FIG. 13B, the controller 180 may sense a second type of touch being applied to any one 1300b of the plurality of icons 1300a, 1300b, 1300c. In this case, the controller 180 may set the any one icon 1300b to a selected state.

Then, when no additional touch is applied for a preset period of time after a touch-up event of the second kind of touch occurs, the controller 180 may execute applications corresponding to the any one icon 1300a and the other icon 1300b. In this case, as illustrated in the fifth drawing of FIG. 13B, the controller 180 may display the execution screens 1320, 1330 of the applications corresponding to any one icon 1300a and the other icon 1300b on the touch screen.

In the above, a method of performing application switching between a plurality of SNS applications has been described.

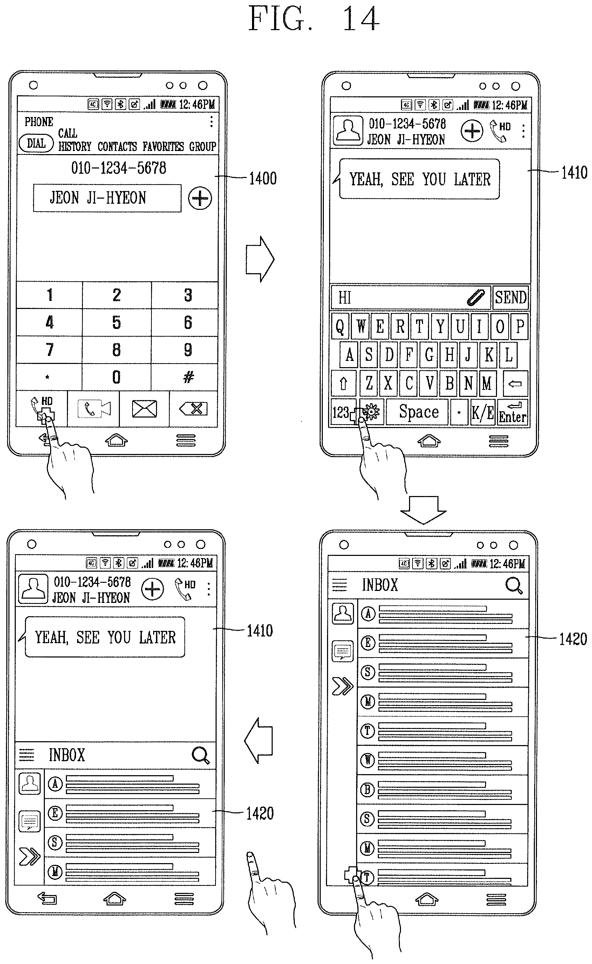

Hereinafter, a method of executing a plurality of applications at the same time when an application is switched a plurality of times will be described. FIG. 14 is a conceptual view illustrating a method of executing a plurality of applications together when an application is switched a plurality of times.

When an application is switched a plurality of times, the controller 180 of the mobile terminal according to the embodiment of the present disclosure may display all of the switched applications on the touch screen. For example, as illustrated in the first and second drawings of FIG. 14, the controller 180 may switch the first application to the second application based on a second kind of touch.

Furthermore, as illustrated in the second and third drawings of FIG. 14, the controller 180 may switch the second application to a third application based on the second type of touch being held. Here, a second type of touch being held may be understood as sensing a second type of touch being sensed in the same region without generating a touch-up event. Accordingly, the controller 180 may conveniently perform two switchings from the first application to the third application with only one touch input.

Subsequent to the two switchings, the controller 180 may sense the occurrence of a touch-up event. In this case, as the touch-up event occurs, the controller 180 may display the execution screens 1410, 1420 of the second application and the third application at the same time on the touch screen . Thus, when an application is switched a plurality of times, the user may simultaneously check the execution screens of applications that have been switched a plurality of times.

In the above, a case where the switching of an application is executed twice, but it may be similarly applied to a case where the switching of the application is executed more than twice.

In the above, a method of executing a plurality of applications at the same time in case where the switching of an application is performed a plurality of times has been described.

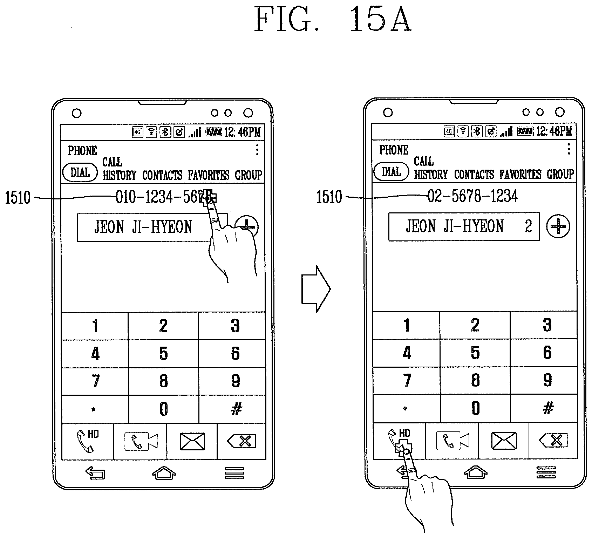

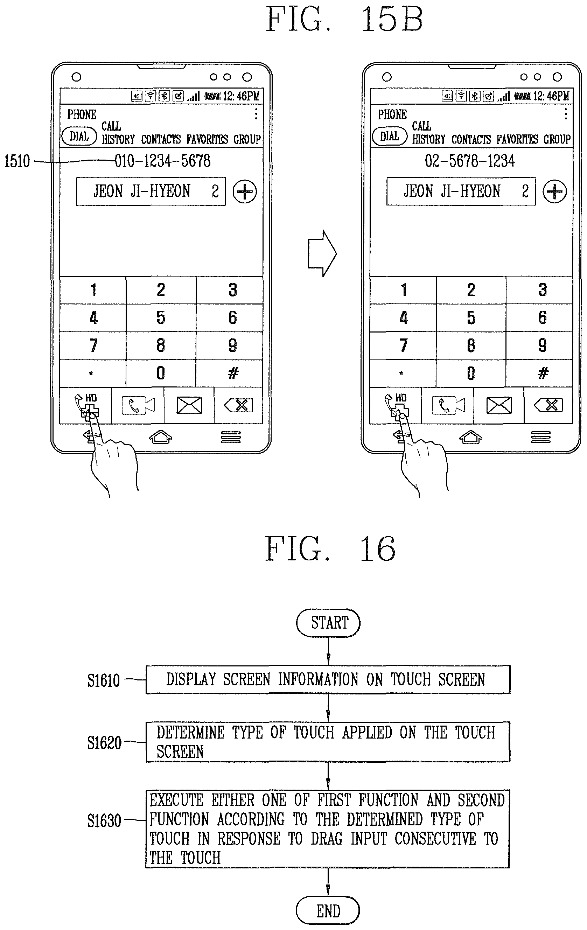

Hereinafter, a method of performing different functions according to a region to which a touch is applied will be described. FIGS. 15A and 15B are conceptual views illustrating a method of performing different functions according to a region to which a touch is applied.

The mobile terminal according to an embodiment of the present disclosure may be provided with an application that executes a function of transmitting a call signal. An execution screen of the application that executes a function of transmitting a call signal may include an identification information display region of an external terminal and at least one graphic object for controlling a call signal.

At this time, the controller 180 may perform different functions based on a type of touch applied to the identification information display region of the external terminal on the execution screen of an application for executing a function of transmitting a call signal. For example, as illustrated in the first drawing of FIG. 15A, when a second type of touch is applied to a region where the phone number information of the external terminal is displayed, the controller 180 may change the phone number information 1500 of the external terminal to other phone number information 1510. The other phone number information may be other phone number information stored in the same identification information of the external terminal or phone number information stored in the identification information of another external terminal. In other words, input phone number information may be changed according to the type of touch.

Alternatively, as illustrated in the first drawing of FIG. 15B, when a first type of touch is applied to a graphic object indicating a function of transmitting a call signal, the controller 180 may transmit a call signal to an external terminal corresponding to first phone number information. Furthermore, as illustrated in the second drawing of FIG.15B, when a second type of touch is applied, the controller 180 may transmit a call signal to an external terminal corresponding to second phone number information.

In the above, a method of performing different functions according to a region to which a touch is applied has been described.

The present disclosure may quickly perform switching between applications with only one touch input in a mobile terminal that performs multitasking. Through this, a user may more naturally perform switching of an application.

Furthermore, the present disclosure may transmit related information together when switching between applications, thereby performing organic switching between applications. Through this, the user may more easily perform switching between applications as well as acquire necessary information without additionally entering the necessary information even when switching an application.

The present disclosure may quickly perform switching between applications with only one touch input in a mobile terminal that performs multitasking. Through this, a user may more naturally perform switching of an application.

Furthermore, the present disclosure may transmit related information together when switching between applications, thereby performing organic switching between applications. Through this, the user may more easily perform switching between applications as well as acquire necessary information without additionally entering the necessary information even when switching an application.

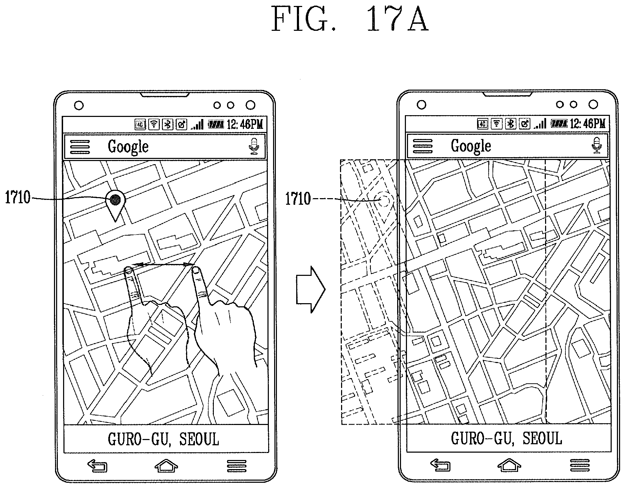

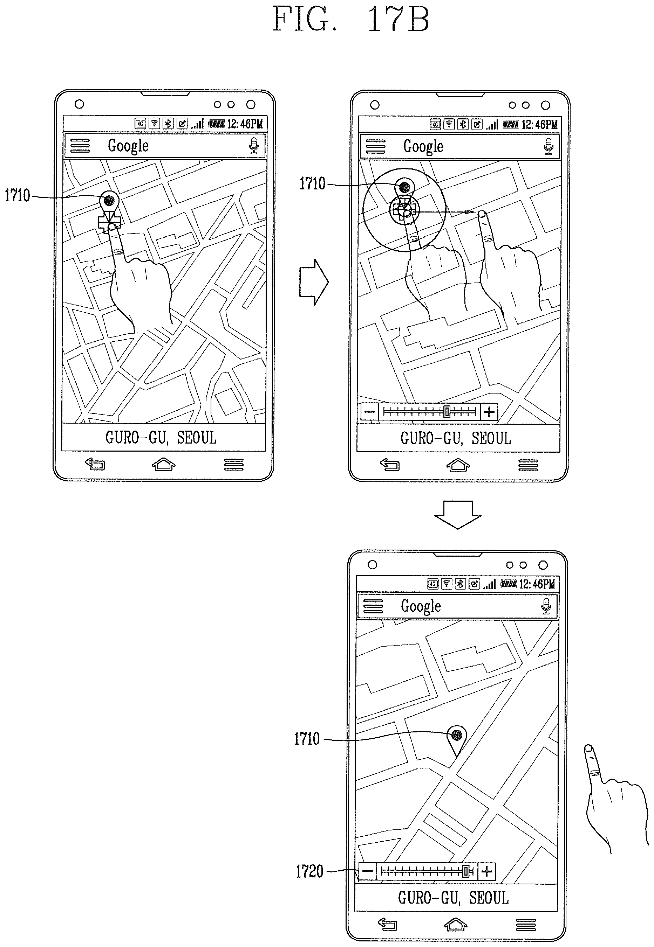

Hereinafter, a method of controlling screen information according to a type of touch applied to the touch screen will be described with reference to the drawings. FIG. 16 is a flowchart illustrating a method of controlling screen information according to a type of touch applied on the touch screen. FIGS. 17A and 17B are conceptual views for explaining the control method of FIG. 16;

The controller of the mobile terminal according to an embodiment of the present disclosure may carry out the process of displaying screen information on the touch screen (S1610).

The controller 180 of the mobile terminal according to an embodiment of the present disclosure may display screen information (or an execution screen) indicating the execution of an application currently being executed among a plurality of applications installed on a home screen page or the mobile terminal on the touch screen. For example, as illustrated in the first drawing of FIG. 17A, the controller 180 may display screen information indicating the execution of a map application for providing map information on the touch screen using the location information of the mobile terminal. The screen information may include all of visual information such as a plurality of graphic objects, text, and images associated with the control of the application.

The home screen page may be screen information displayed in a standby state of the mobile terminal. On the home screen page, an icon, a widget, and the like of an application installed on the mobile terminal may be included.

In a state where the screen information is displayed, the controller of the mobile terminal according to an embodiment of the present disclosure may determine a type of touch applied on the touch screen (S1620).

The controller 180 may sense a touch input applied on the touch screen while the screen information is displayed on the touch screen. In other words, the controller 180 may sense the occurrence of a touch-down event. In this case, the controller 180 may determine a type of touch input applied on the touch screen. For example, the controller 180 may determine that the touch input is either one of a first type of touch and a second type of touch.

Then, the controller of the mobile terminal according to an embodiment of the present disclosure may perform either one of a first function and a second function according to the type of touch in response to a drag input consecutive to the touch input (S1630).

The controller 180 may determine the type of touch that has generated the touch-down event.

Subsequent to determining the type of touch, the controller 180 may sense a drag input consecutive to the touch input. In other words, the controller 180 may sense the occurrence of a touch-and-drag event.

When the touch-and-drag event is sensed, the controller 180 may perform either one of the first function and the second function based on the type of the touch input. The first function and the second function may be functions for controlling screen information. For example, the first function may be a function (or a move mode) for moving and displaying the screen information, and the second function may be a function (or a zoom-in/out mode) for display the screen information in an enlarged and/or reduced manner.

More specifically, when a first type of touch is applied, the controller 180 may execute a first function of dragging the screen information based on the touch-and-drag input.

For example, as illustrated in the first drawing of FIG. 17A, subsequent to applying a first type of touch to the touch screen on which the map information is displayed, the controller 180 may sense a drag being applied subsequent to the first type of touch. In other words, the controller 180 may sense the occurrence of a touch-and-drag event.

In this case, the controller 180 may move the screen information based on a direction in which the drag is applied. For example, as illustrated in the second drawing of FIG. 17A, the controller 180 may move map information from right to left based on a drag touch being applied from right to left.

Alternatively, when a second type of touch is applied, the controller 180 may execute a second function of displaying the screen information in an enlarged and/or reduced manner based on the touch-and-drag input.

For example, as illustrated in the first drawing of FIG. 17B, the controller 180 may sense that a second type of touch is applied while map information is displayed. Then, as illustrated in the second drawing of FIG. 17B, the controller 180 may sense that a drag consecutive to the second type of touch is applied. In other words, the controller 180 may sense the occurrence of a touch-and-drag event.

In this case, the controller 180 may the screen information in an enlarged or reduced manner based on the drag direction. For example, as illustrated in the third drawing of FIG. 17B, the controller 180 may enlarge the map information when the drag has a direction from left to right.

When the screen information is enlarged or reduced, the controller 180 may display guide information 1720 indicating an enlargement or reduction ratio of the enlarged or reduced information on the display unit. For example, the guide information 1720 may indicate an enlargement or reduction ratio through a scale value.

Then, the controller 180 may sense that a touch-up event has occurred. In this case, the controller 180 may control the touch screen to locate a region to which a second type of touch is applied prior to enlarging the map information in a central region of the touch screen. For example, as illustrated in the third drawing of FIG. 17B, when a drag input consecutive to a touch that has applied to a region displayed with a graphic object 1710 prior to enlarging the map information is terminated, the enlarged map information may be displayed around a region where the object 1710 is displayed.

Therefore, the user may receive map information displayed in a region intended to be enlarged or reduced through the central region of the touch screen.

Meanwhile, the controller 180 may determine the type of touch when a touch consecutive to the drag input is applied during the execution of either one of the first function and the second function. As a result of the determination, when the touch is a second type of touch, the controller 180 may execute a function different from a function currently being executed. In other words, the controller 180 may switch between the first function and the second function based on the second type of touch.

For example, when a second type of touch consecutive to a drag input is applied during the execution of the enlargement/reduction function, the controller 180 may execute a move function. In this case, the controller 180 may move the screen information based on the drag input.

In the above, a method of executing different functions according to different types of touches has been described.

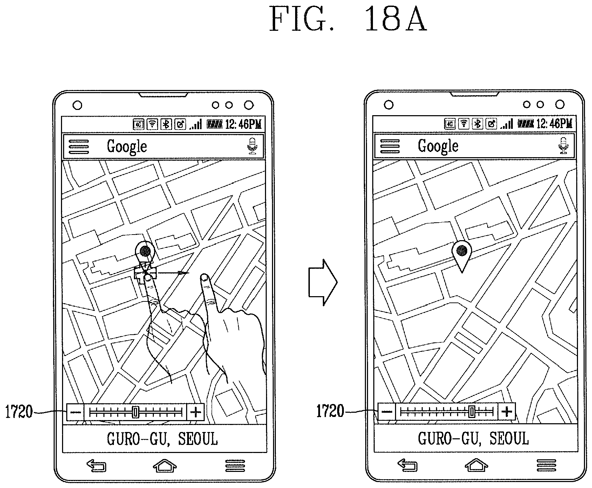

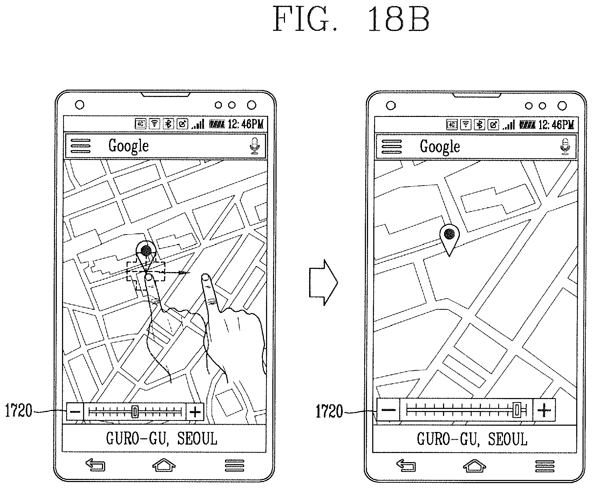

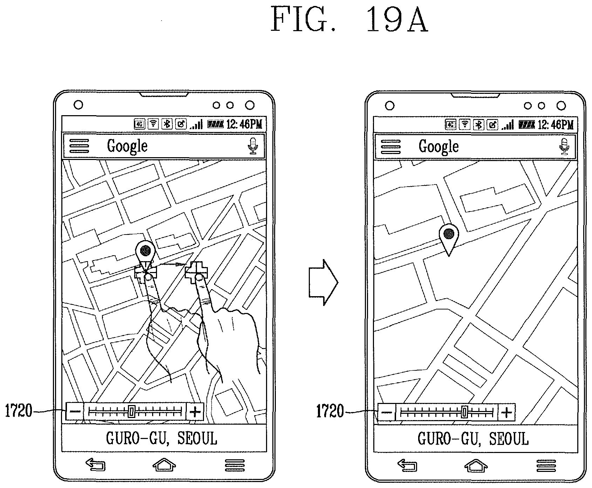

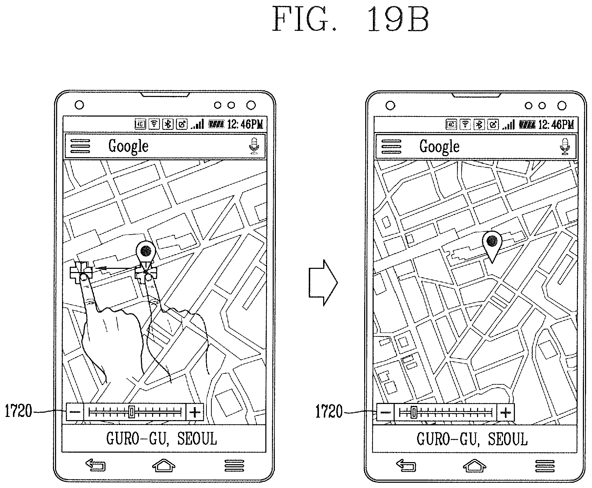

Hereinafter, executing different functions according to a touch attribute of the second type of touch will be described. FIGS. 18A and 18B are conceptual views illustrating an example in which different functions are carried out according to a touch strength of a second type of touch. FIGS. 19A and 19B are conceptual views illustrating a example in which different functions are carried out according to the direction of a touch.

The mobile terminal according to an embodiment of the present disclosure may perform different functions according to a touch attribute of a touch applied on the touch screen of the mobile terminal. The touch attribute may include a length of the touch, a direction of the touch, a pressure of the touch, an area of the touch, and the like.

First, the controller 180 of the mobile terminal according to an embodiment of the present disclosure may perform different functions according to the pressure of the touch.

More specifically, the touch screen of the mobile terminal according to an embodiment of the present disclosure may further include a pressure sensor that senses a pressure applied by a touch object on the touch screen. Accordingly, the controller 180 may sense a pressure of the touch applied by the touch object, based on the input information received from the pressure sensor.

The controller 180 may enlarge and/or reduce screen information based on the pressure of the touch. At this time, according to the present disclosure, a ratio at which the screen information is enlarged or reduced may be increased in proportion to the pressure of the touch applied to the touch screen.

More specifically, when the pressure of the touch applied on the touch screen is in a first pressure range, the controller 180 may display the screen information in an enlarged or reduced manner at a first ratio. Here, the first pressure range is a range between a first pressure value at the minimum and a second pressure value at the maximum. In addition, the first ratio may be a preset value at the time of factory setting of the mobile terminal, or may be set by the user as a ratio matched to the first pressure range.

For example, as illustrated in the first and second drawings of FIG. 18A, when a touch pressure within the first pressure range is applied, the controller 180 may display map information at a ratio of 20% in an enlarged or reduced manner. In this case, guide information 1720 indicating the enlargement ratio may be simultaneously displayed on the display unit 151.

When the pressure of the touch applied on the touch screen is a second pressure range having a value larger than the first pressure range, the controller 180 may display the screen information at a second ratio larger than the first ratio in an enlarged or reduced manner. The second pressure range is a range between a third pressure value, which is greater than the second pressure value, at the minimum and a fourth pressure value at the maximum. Furthermore, the second ratio is a ratio matched to the first pressure range.

For example, as illustrated in the first and second drawings of FIG. 18B, when the pressure of the touch is a second pressure, the controller 180 may display the map information at a ratio of 40% in an enlarged manner. In this case, guide information 1720 indicating the enlargement ratio may be simultaneously displayed on the display unit 151.

On the other hand, although not shown in the drawing, according to the present disclosure, the enlargement or reduction ratio of the screen information may be inversely proportional to the pressure of the touch. In this case, unlike the case described above, when the pressure of the touch increases, the enlargement or reduction ratio of the screen information may be reduced.

In other words, according to an embodiment of the present disclosure, it may be possible to freely adjust the enlargement or reduction ratio in proportion to the pressure of the touch input while the touch input is held, thereby achieving faster enlargement or reduction and finer enlargement or reduction an operation consecutive to a single touch input.

In addition, the controller 180 may perform different functions according to the direction of the touch applied on the touch screen.

More specifically, when the touch-and-drag event occurs, the controller 180 may sense the direction of the drag. In this case, the controller 180 may display the screen information in an enlarged manner when the drag is in the first direction, and display the screen information in a reduced manner when the drag is in the second direction. In other words, the present disclosure may perform different functions according to the drag direction.

For example, as illustrated in the first drawing of FIG. 19A, subsequent to sensing the second type of touch, the controller 180 may sense a drag moving from left to right, consecutive to the second type of touch. In this case, as illustrated in the second drawing of FIG. 19A, the controller 180 may display the map information in an enlarged manner in response to the drag. In this case, guide information 1720 indicating the enlargement ratio may be simultaneously displayed on the display unit 151.

On the contrary, as illustrated in the first drawing of FIG. 19A, subsequent to sensing the second type of touch, the controller 180 may sense a drag moving from right to left, consecutive to the second type of touch. In this case, as illustrated in the second drawing of FIG. 19B, the controller 180 may display the map information in a reduced manner in response to the drag input. In this case, guide information 1720 indicating the reduction ratio may be simultaneously displayed on the display unit 151.

In other words, the present disclosure may reduce or enlarge the screen information according to the direction of the drag.

Furthermore, although not shown in the drawing, the controller 180 may change the enlargement or reduction speed of the screen information according to a pressure applied to the drag. More specifically, when the pressure of the drag input increases, the controller 180 may increase the enlargement or reduction speed of the screen information together. For example, when the pressure of the drag input is in a first pressure range, the controller 180 may set the enlargement or reduction speed of the screen information to a first speed. For example, when the pressure of the drag input is in a second pressure range, the controller 180 may set the enlargement or reduction speed of the screen information to a second speed. The enlargement or reduction speed of the screen information according to the drag input may be set by the user or preset at the time of factory setting of the mobile terminal. Here, the first pressure range may be a range between a first pressure value at the minimum and a second pressure value at the maximum, and the second pressure range is a range between a third pressure value, which is equal to or greater than the second pressure, at the minimum and a fourth pressure value at the maximum.

On the other hand, in the foregoing description, a method of controlling screen information according to each touch attribute has been described. However, the present disclosure may control screen information in different ways by combining at least two of the plurality of touch attributes.

In the above, a method of controlling screen information according to the attribute of a touch applied on the touch screen has been described.

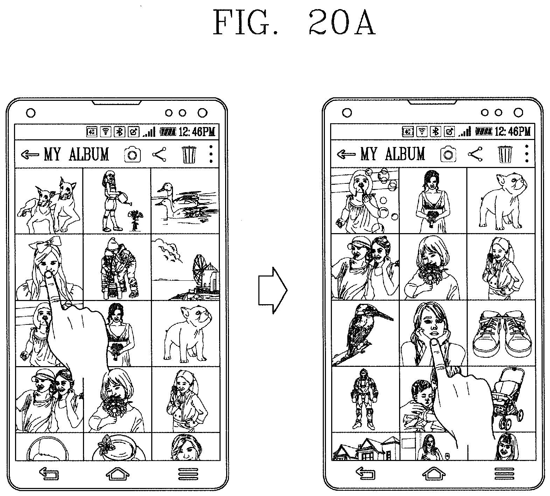

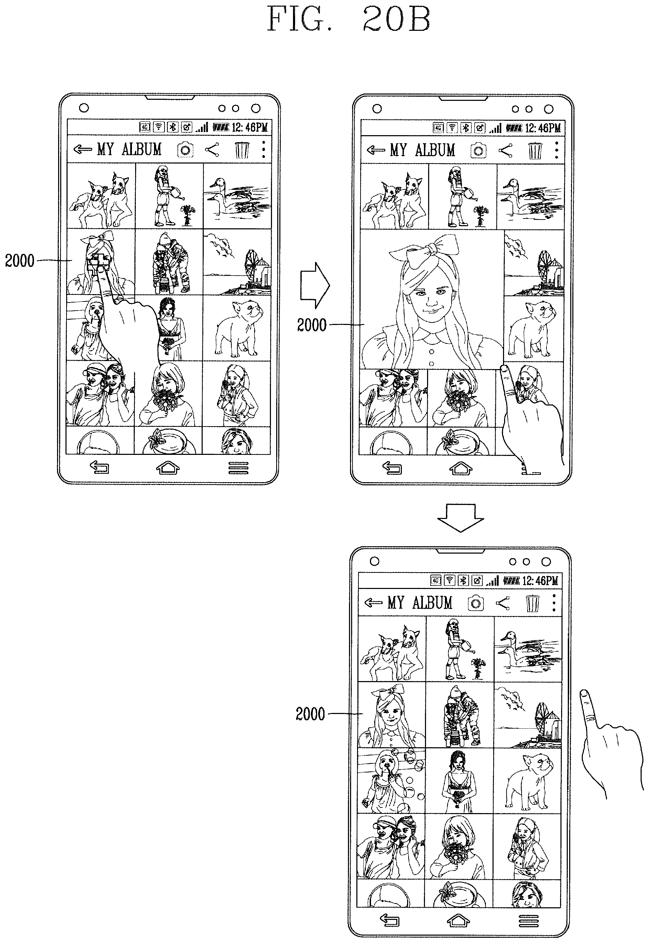

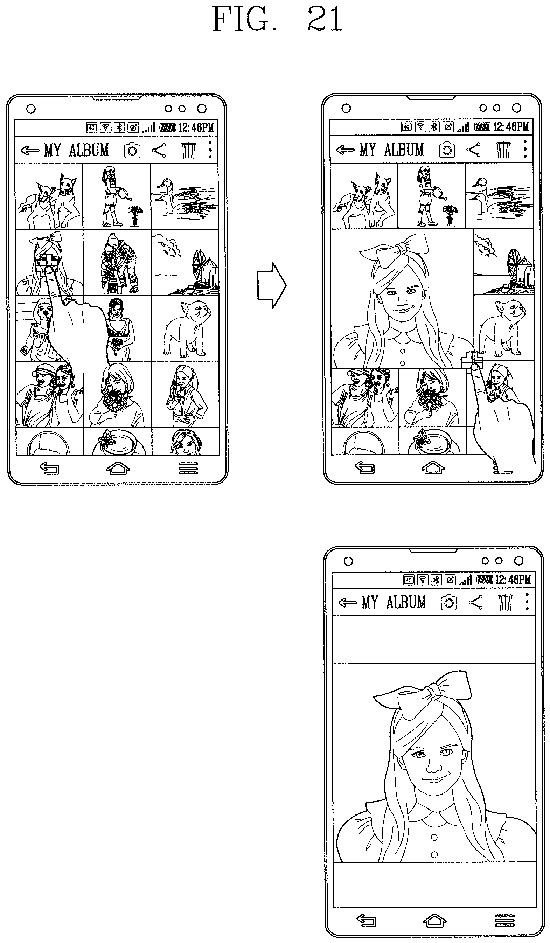

Hereinafter, a method of performing different functions according to a type of touch in a gallery application will be described. FIGS. 20A, 20B and FIG. 21 are conceptual views illustrating a method of performing different functions according to a type of touch in a gallery application.

The mobile terminal according to an embodiment of the present disclosure may be provided with a gallery application that provides a plurality of images stored in the memory 170. The gallery application may be an application program that provides still images and moving images stored in the memory 170. The gallery application may be replaced by a term such as a photo album application, a photo application, a file management application, a multimedia application or the like.

When the gallery application is executed, the controller 180 may display a thumbnail image corresponding to at least part of images stored in the memory 170. For example, as illustrated in the first drawing of FIG. 20A, thumbnail images corresponding to at least part of the plurality of images stored in the memory 170 may be displayed on the touch screen.

The controller 180 may perform different functions based on a type of touch applied to the touch screen while the thumbnail images are displayed. More specifically, the controller 180 may perform a first function of scrolling the thumbnail images based on a first type of touch and a drag consecutive to the touch being applied to the thumbnail images. For example, as illustrated in the first and second drawings of FIG. 20A, the controller 180 may perform scrolling of thumbnail images based on a first type of touch and a drag consecutive to the touch.

In addition, the controller 180 may execute a second function of changing a size of any one of the thumbnail images based on a second type of touch and a drag consecutive to the touch being applied to the thumbnail image. For example, as illustrated in the first drawing of FIG. 20B, the controller 180 may sense that a second type of touch is applied. Then, as illustrated in the second drawing of FIG. 20B, the controller 180 may change a size of the thumbnail image 2000 displayed in a region to which the second type of touch is applied in response to a drag consecutive to the second type of touch being applied. The size of the thumbnail image may have a size corresponding to a dragged length. Here, the dragged length may be a straight line length between a start point and an end point of the touch of the drag. Therefore, the user may view only a specific thumbnail image in a state where the thumbnail images are displayed.

Moreover, when the drag input is terminated, that is, when a touch-up event occurs, the controller 180 may change a size of the thumbnail image having the changed size to an original size. In other words, the size of the thumbnail image may be displayed in a size prior to changing the size. For example, as illustrated in FIG. 20B, when a touch-up event occurs, the controller 180 may change a size of the thumbnail image 2000 displayed in an enlarged manner to its original size prior to being displayed in an enlarged manner Therefore, the user may temporarily view a specific thumbnail image, and then return to its original size.

The controller 180 may display an image corresponding to the thumbnail image on the entire display area of the touch screen when a length of the applied drag input is equal to or greater than a preset length value. In this case, the remaining thumbnail images may disappear on the touch screen.

For example, as illustrated in the first to third drawings of FIG. 21, when the second type touch and a drag consecutive to the second type of touch are applied to more than a preset length, the controller 180 may display an image corresponding to a specific thumbnail image on the entire display area of the touch screen.

At this time, although not shown in the drawing, when an image corresponding to a specific thumbnail image is a video, the controller 180 may immediately play back the video.

In the above, a method of executing different functions according to a type of touch in a gallery application has been described.

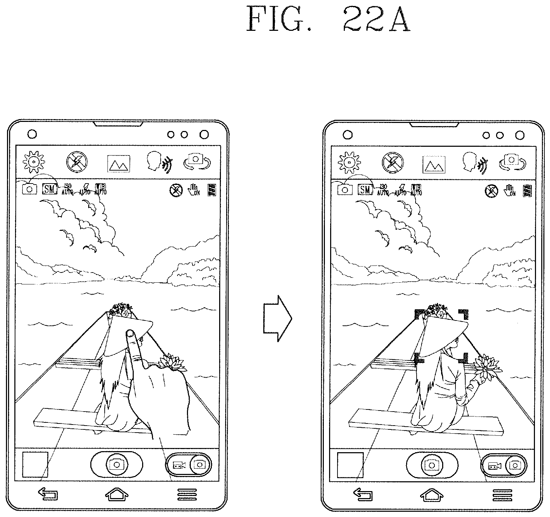

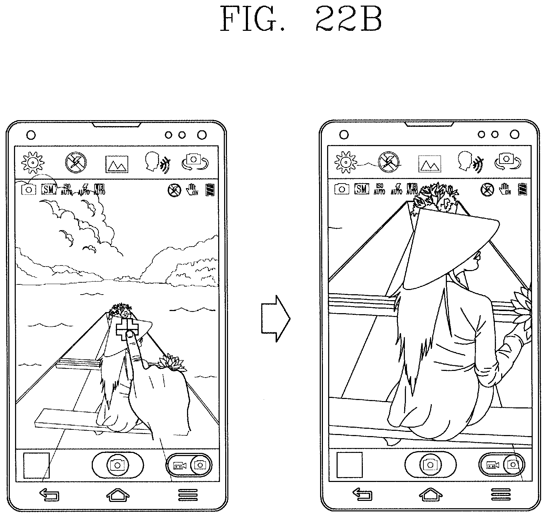

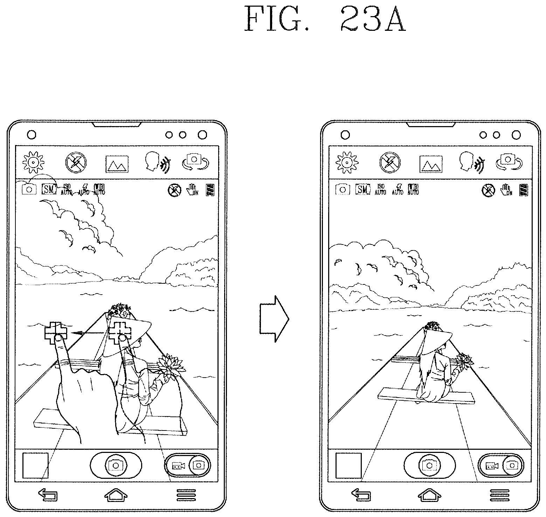

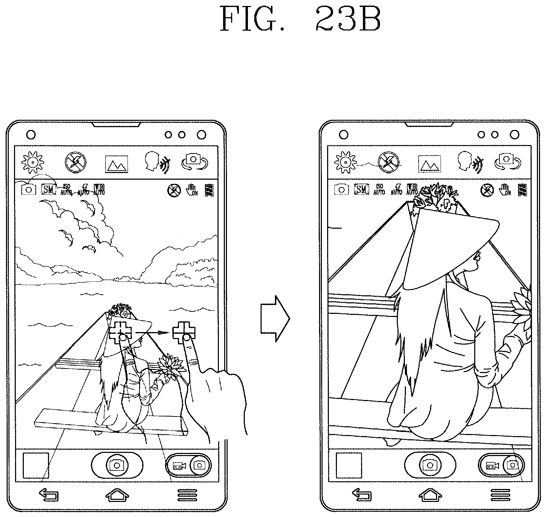

Hereinafter, a method of executing different functions according to a type of touch in a camera application will be described. FIGS. 22A, 22B, 23A, and 23B are conceptual views illustrating a method of performing different functions according to a type of touch in a camera application.

The mobile terminal according to an embodiment of the present disclosure may further include a camera 121. The camera 121 may include an image sensor, and may be formed to receive an image of a subject through the image sensor.

The controller 180 may display an image received from the camera 121 on the touch screen. In this case, the controller 180 may control the camera 121 based on a type of touch applied to the touch screen. More specifically, when a touch applied on the touch screen is a first type of touch, the controller 180 may control the camera to set the focus of the camera at a position corresponding to a region to which the touch has applied.

For example, as illustrated in the first drawing of FIG. 22A, while an image received from the camera 121 is displayed on the touch screen, the controller 180 may sense that a first type of touch is applied to a specific region. In this case, as illustrated in the second drawing of FIG. 22A, the controller 180 may control the camera 121 to locate the focus of the camera 121 at a position corresponding to the specific region.

In addition, when a touch applied on the touch screen is a second type of touch, the controller 180 may zoom in or out the camera according to the direction of a drag consecutive to the second type of touch. Here, zooming in or out may include digital zooming in or out that is zooming in or out of an image received from the camera and optical zooming in or out that adjusts a lens of the camera to actually zoom in or out the lens.

For example, as illustrated in the first drawing of FIG. 22B, while an image received from the camera 121 is displayed on the touch screen, the controller 180 may sense that a first type of touch is applied to a specific region. In this case, as illustrated in the second drawing of FIG. 22B, the controller 180 may zoom in the camera 121 around an image displayed in a region to which the second type of touch is applied.

Furthermore, although not shown in the drawing, the controller 180 may change a ratio of zooming in the camera 121 according to a pressure of the second type of touch. For example, when a pressure of the second type of touch is within a first pressure range, the controller 180 may set a ratio of zooming in the camera 121 to a first ratio, and when a pressure of the second type of touch is within a second pressure range, the controller 180 may set a ratio of zooming in the camera 121 to a second ratio. Here, the first pressure range may be a range between a first pressure value at the minimum and a second pressure value at the maximum, and the second pressure range is a range between a third pressure value, which is equal to or greater than the second pressure, at the minimum and a fourth pressure value at the maximum.

Therefore, the user may adjust a pressure of the touch applied on the touch screen, thereby easily operating the camera.

Furthermore, when the occurrence of a touch-and-drag event occurs subsequent to sensing a second type of touch, the controller 180 may zoom in or out the camera 121 according to the direction of the drag. For example, as illustrated in FIG. 23A, when the direction of a drag input consecutive to a second type of touch is a direction directed from right to left, the controller 180 may zoom out the camera 121.

For another example, as illustrated in FIG. 23B, when the direction of a drag input consecutive to a second type of touch is a direction directed from left to right, the controller 180 may zoom in the camera 121.

In the above, a method of controlling screen information according to the type of touch has been described. Through this, the present disclosure may more conveniently control screen information with only a single operation.

Moreover, the present disclosure may perform a touch operation, and then move screen information around a region in which the touch operation has been carried out, thereby providing a portion determined by the user as a region of interest.

The present disclosure may quickly perform switching between applications with only one touch input in a mobile terminal that performs multitasking. Through this, a user may more naturally perform switching of an application.

Furthermore, the present disclosure may transmit related information together when switching between applications, thereby performing organic switching between applications. Through this, the user may more easily perform switching between applications as well as acquire necessary information without additionally entering the necessary information even when switching an application.

In addition, the present disclosure may more conveniently control screen information with only a single operation.

Moreover, the present disclosure may perform a touch operation, and then move screen information around a region in which the touch operation has been carried out, thereby providing a portion determined by the user as a region of interest.

The foregoing present disclosure may be implemented as codes readable by a computer on a medium written by the program. The computer-readable media includes all types of recording devices in which data readable by a computer system can be stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the electronic device. The foregoing embodiments are merely exemplary and are not to be considered as limiting the present disclosure. The scope of the invention should be determined by reasonable interpretation of the appended claims and all changes that come within the equivalent scope of the invention are included in the scope of the invention.

## Claims

1. A mobile terminal, comprising:
a touch screen;
a sensing unit configured to sense at least one of a pressure, a capacitance, and an area applied to the touch screen; and
a controller configured to determine a type of touch applied to the touch screen based on sensing information sensed from the sensing unit while an execution screen of a first application is displayed on the touch screen, and execute at least one of a function associated with a first application and a function associated with a second application different from the first application,
wherein when a function associated with the second application is executed, the controller executes the function associated with the second application using information transferred from the first application.

2. The mobile terminal of claim 1, wherein the controller executes a function associated with the first application when a type of touch applied on the touch screen is a first type of touch applied with a pressure less than a preset value, and executes a function associated with the second application when the type of touch applied on the touch screen is a second type of touch applied with a pressure above the preset value.

3. The mobile terminal of claim 2, wherein the controller displays an execution screen of the second application on the touch screen, and displays an execution screen of a third application different from the first and second applications on the touch screen when a third type of touch consecutive to the second type of touch is applied while the execution screen of the second application is displayed on the touch screen.

4. The mobile terminal of claim 3, wherein the third type of touch comprises a touch applied with a pressure above a preset value and a drag touch consecutive to the touch.

5. The mobile terminal of claim 3, wherein the controller executes the second application again in response to a fourth type of touch different from the third type of touch is applied while the execution screen of the third application is displayed.

6. The mobile terminal of claim 1, wherein when there are a plurality of the second applications, the controller displays an application list including items corresponding to a plurality of applications that can be executed using information included in the first application based on a touch with a pressure above a preset value being applied while the execution screen of the first application is displayed on the touch screen.

7. The mobile terminal of claim 1, wherein the second application is any one application that is set based on the usage patterns of a plurality of applications among the plurality of applications in which information included in the first application is available for use.

8. The mobile terminal of claim 1, wherein the controller sets priorities among a plurality of applications based on the usage patterns of the applications when there are a plurality of the second applications, and executes any one of the plurality of applications based on the set priorities when the type of touch corresponds to a preset type.

9. The mobile terminal of claim 8, wherein when a touch different from the preset type of touch is applied again while the any one application is executed, the controller executes another application different from the any one of the plurality of applications based on the priorities.

10. The mobile terminal of claim 1, wherein the controller executes a function associated with the first application when the type of touch corresponds to a first type, and executes a function associated with the first application, and then displays an execution screen of the second application on the touch screen when the type of touch is a second type different from the first type.

11. The mobile terminal of claim 10, wherein the controller executes a function associated with the second application using information included in the first application when the first type of touch is applied again while the execution screen of the second application is displayed.

12. The mobile terminal of claim 10, wherein the controller executes a function associated with the second application, and then displays an execution screen of a third application different from the first and second applications on the touch screen when a touch corresponding to the second type is applied again while the execution screen of the second application is displayed.

13. The mobile terminal of claim 12, wherein the third application is an application in which information included in the first application is available for use.

14. The mobile terminal of claim 10, wherein the controller displays an execution screen of a third application different from the first and second applications on the touch screen without executing a function associated with the second application when a third type of touch is applied while the execution screen of the second application is displayed.

15. The mobile terminal of claim 1, wherein when there are a plurality of the second applications, the controller transmits information included in the first application to the plurality of applications at the same time to allow a function associated with the plurality of applications to use information included in the first application based on a preset type of touch being applied for the execution of the second application.

16. A method of controlling a mobile terminal, the method comprising:
sensing a touch applied on the touch screen while an execution screen of a first application is displayed on a touch screen;
determining a type of the sensed touch; and
executing at least one of a function associated with the first application and a function associated with a second application based on the determined type of touch.

17. The method of claim 16, wherein said executing a function executes a function associated with the second application using specific information included in the first application when the function associated with the second application is executed.

18. The method of claim 16, wherein said determining a type of the touch determines the sensed touch as a first type of touch when a pressure of the sensed touch is less than a preset pressure, and determines the sensed touch as a second type of touch when a pressure of the sensed touch is above a preset pressure.

19. The method of claim 18, wherein said executing a function executes a function associated with the first application based on the first type of touch, and executes a function associated with the second application based on the second type of touch.

20. The method of claim 16, wherein said executing a function further comprises switching the first application to a second application when executing a function associated with the second application.

21. A mobile terminal, comprising:
a touch screen;
a sensing unit configured to sense at least one of a pressure, a change of capacitance, and an area applied on the touch screen; and
a controller configured to determine a type of touch applied on the touch screen based on sensing information sensed through the sensing unit while screen information is displayed on the touch screen, and execute either one of a first function and a second function according to the determined type of touch,
wherein a first function of moving the screen is executed in response to the drag input when the type of touch is a first type, and a second function of enlarging or reducing the screen is executed in response to the drag input when the type of touch is a second type.

22. The mobile terminal of claim 21, wherein the first type of touch is a touch applied with a pressure less than a preset value, and the second type of touch is a touch applied with a pressure above the preset value.

23. The mobile terminal of claim 21, wherein when the type of touch is a second type, the controller enlarges or reduces the screen according to the direction of the drag input.

24. The mobile terminal of claim 21, wherein the controller controls the touch screen to locate a region to which the second type of touch is applied in a central region of the touch screen subsequent to executing the second function of enlarging or reducing the screen.

25. The mobile terminal of claim 21, wherein when the type of touch is a second kind, the controller determines an enlargement or reduction ratio of the screen information based on a pressure applied by drag touch consecutive to the touch.

26. The mobile terminal of claim 21, wherein the screen information is a thumbnail image of at least one image stored in the mobile terminal, and
the controller executes a first function of scrolling the thumbnail image of at least one image in response to the drag input when the touch is a first type of touch, and executes a second function of changing a size of the thumbnail image of at least one image displayed on a region of the thumbnail image of at least one image to which the touch is applied in response to the drag input when the touch is a second type of touch.

27. The mobile terminal of claim 26, wherein the controller displays the thumbnail image in a size prior to enlarging the thumbnail image when the drag input is terminated in a state where the size of the thumbnail image is changed.

28. The mobile terminal of claim 26, wherein the controller displays an image corresponding to the thumbnail image on the display unit when the second type of touch consecutive to the drag input is applied again in a state where the size of the thumbnail image is changed.

29. The mobile terminal of claim 26, wherein the controller displays an image corresponding to the thumbnail image on the display unit when the thumbnail image has a preset size.

30. A method of controlling a mobile terminal, the method comprising:
displaying screen information on the touch screen;
determining a type of touch applied to the touch screen; and
executing either one of a first function and a second function according to the determined type of touch in response to a drag input consecutive to the touch,
wherein a first function of moving the screen in response to the drag input is executed when the type of touch is a first type, and a second function of enlarging or reducing the screen in response to the drag input is executed when the type of the touch is a second type.
